# EUROPEAN PATENT SPECIFICATION

(11) **EP 0 837 579 B1**
(45) Date of publication and mention of the grant of the patent: **12.03.2008**
(21) Application number: 97117812.4
(22) Date of filing: 15.10.1997
(51) Int. Cl.: H04L 12/28

(54) **Data transfer control device, relay device and control device suitable for home network environment**
Gerät zur Datenübertragungssteuerung, Relaisvorrichtung und Steuerungsvorrichtung für ein Haus-Netzwerk
Dispositif de commande de transfert de données, dispositif relais et dispositif de contrôle appropriés pour un réseau domotique

(30) Priority: 15.10.1996 JP 27267296
(43) Date of publication of application: 22.04.1998
(73) Proprietor: KABUSHIKI KAISHA TOSHIBA, Kawasaki-shi, Kanagawa-ken 210-8572 (JP)
(72) Inventor: Saito, Takeshi, Inagi-shi, Tokyo (JP); Takabatake, Yoshiaki, Yokohama-shi, Kanagawa (JP); Hashimoto, Mikio, Ichikawa-shi, Chiba (JP)
(74) Representative: Zangs, Rainer E.

(56) References cited:
- WO-A-95/27357
- US-A- 5 555 244
- PATENT ABSTRACTS OF JAPAN vol. 1996, no. 04, 30 April 1996 (1996-04-30) & JP 07 336642 A (CANON INC), 22 December 1995 (1995-12-22) & US 6 064 772 A (TANNO ET AL) 16 May 2000 (2000-05-16)
- PUNG H K ET AL: "A TCP/IP-X.25 gateway to Teleview" SINGAPORE ICCS '94. CONFERENCE PROCEEDINGS. SINGAPORE 14-18 NOV. 1994, NEW YORK, NY, USA,IEEE, US, vol. 3, 14 November 1994 (1994-11-14), pages 1164-1168, XP010150123 ISBN: 0-7803-2046-8

## Description

### BACKGROUND OF THE INVENTION

### FIELD OF THE INVENTION

The present invention relates to a network system for constructing a home network environment, and more particularly, to a data transfer control device, a relay device, and a control device suitable for use in the home network environment.

### DESCRIPTION OF THE BACKGROUND ART

In recent years, there is a rapid trend for digitalizing electronic instruments as exemplified by the term "multi-media", and this trend is already noticeable in the office environment.

More specifically, in terms of hardware, this trend has been materialized in forms of introduction of PCs, digitalization of 0A devices and formation of networks among them. Also, in terms of software, this trend has been expanding to cover the basic functions of hosts (which are progressively light-sized and transferred to PCs), the application software such as the word-processing software, the spreadsheet software, etc., and the Internet application such as the WWW.

The similar trend can also be seen in the home environment. Namely, even in the home environment, this trend for digitalization has been steadily progressed in forms of digitalization of AV devices (DVD, digital VTR, digital video camera, etc.), digitalization of broadcasting, and Internet access such as OCN.

Similarly as in a case of the office environment, this trend is expected to progress toward the formation of networks in future. Namely, it is expected that the technologies of various fields such as information processing, communication and broadcasting will be unified by the digitalization, and inter-mixed with each other by the formation of networks.

There are many candidates for the network technologies in this direction. For example, the Ethernet has overwhelming records of the actual use in the office environment and is probably the most promising candidate even for the home PC network. Also, the ATM is another serious contender because of the general consensus among the infra-structure constructors (telephone companies, CATV companies, etc.) to keep constructing the infra-structures based on this technology in view of the advantageous characteristics of the ATM such as its fast, real-time, and wide bandwidth properties.

In addition to these candidates, the network technology (bus technology) called IEEE 1394 has been attracting much attentions recently. This IEEE 1394 has several remarkable characteristics such as its fast, real-time (Q0S guaranteed), and plug-and-play properties, so that there is a high expectation especially among the AV industries on the IEEE 1394 as the most promising candidate for a future scheme for inter-connecting digital AV devices. This vogue has also instigated much interests to the IEEE 1394 from the computer industries as well.

In the initial phase, it is expected that the inter-connection of the home use digital devices will be realized by these various network technologies in conjunction with the spread of the home use digital devices, depending on preferences and demands of the users, and in this way prototype digital networks will be gradually built up inside each home.

In the second phase, there will be demands for inter-connecting these digital networks together. For example, there will be a desire to inter-connect an AV device connected to the 1394 network of a guest room on the first floor with another AV device connected to the 1394 network of a private room on the second floor in order to realize the dubbing or the cooperative operation between these AV devices.

However, in order to meet the expected demands of this second phase, the following problems must be addressed and resolved.

For now, it is highly likely that many AV devices will appear as dedicated 1394 terminals. This is because the infra-structures such as the Internet and B-ISDN are not yet fully developed so far so that it is presently rather difficult to develop any AV device that presupposes the availability of these infra-structures.

On the other hand, as these infra-structures come to be fully developed, it is expected that AV devices compatible with the Internet or B-ISDN will appear, but then it would be difficult to inter-connect such AV devices with the by then existing dedicated 1394 terminals. In addition, in such a case, only those terminals which are connected to the same 1394 as the dedicated 1394 AV devices would be capable of exchanging AV data and it would be impossible to exchange data with nodes which are connected to networks other than 1394 or nodes which are far distanced.

US 6.064.772 discloses an image reproducing apparatus formed by a personal computer and a related method. An ATM network is shown in which various kinds of encoded data are transferred, the network comprising a line representing a local area network LAN and a line representing a local area network in conformity with the IEEE 1394 standard. Various devices are connected to one or more of the different networks such that information can be exchanged.

XP 10150123 discloses a TCP/IP - X.25 gateway that bridges the users of computer networks supporting TCP/IP protocol to Teleview via the X.25 public data network. The communication architecture shown comprises a LAN subscriber, a Teleview gateway, and a X.25 router. Information is transferred via the different components of the communication network.

WO 95/27357 relates to the interconnection of local communication bus systems and discloses devices to interconnect different networks such that receiving and transmitting devices can be in communication with each other in spite of the different networks for interconnecting the devices. Especially, AV devices are shown which are connected to a network which is linked to a second network via gateways enabling communications therebetween.

### SUMMARY OF THE INVENTION

It is therefore an object of the present invention to provide a a relay device, as well as a method for controlling such relay device, capable of resolving the above noted problems and suitable for use in the home network environment.

According to the invention, the above object is achieved by providing a relay device comprising the features set out in claim 1. Advantageous embodiments are described in the subclaims. Further, according to the invention, a method achieving the above object comprises the steps set out in claim 11.

Other features and advantages of the present invention will become apparent from the following description taken in conjunction with the accompanying drawings.

### BRIEF DESCRIPTION OF THE DRAWINGS

Fig. 1 is a block diagram showing an exemplary overall configuration of a communication network (home network) according to the first embodiment of the present invention.
Fig. 2 is a block diagram showing an exemplary internal configuration of a half gateway in the communication network of Fig. 1.
Fig. 3 is a diagram showing one example of a correspondence table (for a case of transmitting data received from a 1394 side to an ATM side) provided in a 1394/ATM transfer unit of the half gateway of Fig. 2.
Fig. 4 is a diagram showing one example of a correspondence table (for a case of transmitting data received from an ATM side to a 1394 side) provided in a 1394/ATM transfer unit of the half gateway of Fig. 2.
Fig. 5 is a sequence chart for an operation sequence in a case of transmitting video data from a transmitting terminal to a receiving terminal in the communication network of Fig. 1.
Fig. 6 is a diagram showing one example of a table for storing attribute information of information devices provided in an AV control terminal of the communication network of Fig. 1.
Fig. 7 is a diagram showing one example of a screen display by a display device that can be provided in an AV control terminal of the communication network of Fig. 1.
Fig. 8 is a diagram showing a communication route set up in the communication network of Fig. 1 according to the sequence of Fig. 5.
Fig. 9 is a block diagram showing an exemplary overall configuration of a communication network according to the second embodiment of the present invention.
Fig. 10 is a block diagram showing an exemplary internal configuration of an AV control terminal in the communication network of Fig. 9.
Fig. 11 is a sequence chart for an operation sequence in a case of transmitting video data from a video server to a receiving terminal in the communication network of Fig. 9.
Fig. 12 is a diagram showing a communication route set up in the communication network of Fig. 9 according to the sequence of Fig. 11.
Fig. 13 is a block diagram showing another exemplary overall configuration of a communication network according to the second embodiment,of the present invention, which uses an ATM access network instead of the Internet of Fig. 9.
Fig. 14 is a block diagram showing an exemplary internal configuration of an AV control terminal in the communication network of Fig. 13.
Fig. 15 is a sequence chart for an operation sequence in a case of transmitting video data from a video server to a receiving terminal in the communication network of Fig. 13.
Fig. 16 is a block diagram showing another exemplary internal configuration of an AV control terminal in the communication network of Fig. 9, which has an MPEG decoding unit.
Fig. 17 is a sequence chart for an operation sequence in a case of transmitting video data from a video server to a receiving terminal in the communication network of Fig. 9 by using an AV control terminal of Fig. 16.
Fig. 18 is a block diagram showing an exemplary overall configuration of a communication network according to the third embodiment of the present invention, for a case of receiving video data from an external network at a video terminal on the home network.
Fig. 19 is a sequence chart for an operation sequence in a case of transmitting video data from a transmitting terminal (on the Internet) to a receiving terminal (on the home network) in the communication network of Fig. 18.
Fig. 20 is a diagram showing a communication route set up in the communication network of Fig. 18 according to the sequence of Fig. 19.
Fig. 21 is a block diagram showing one exemplary internal configuration of a half gateway in the communication network of Fig. 18.
Fig. 22 is a block diagram showing another exemplary internal configuration of a half gateway in the communication network of Fig. 18.
Fig. 23 is a block diagram showing another exemplary overall configuration of a communication network according to the third embodiment of the present invention, for a case of transmitting video data to an external network from a video terminal on the home network.
Fig. 24 is a block diagram showing an exemplary internal configuration of a half gateway in the communication network of Fig. 23.
Fig. 25 is a sequence chart for an operation sequence in a case of transmitting video data from a transmitting terminal (on the home network) to a receiving terminal (on the Internet) in the communication network of Fig. 23.

### DETAILED DESCRIPTION OF THE PREFERRED EMBODIMENTS

### <First Embodiment>

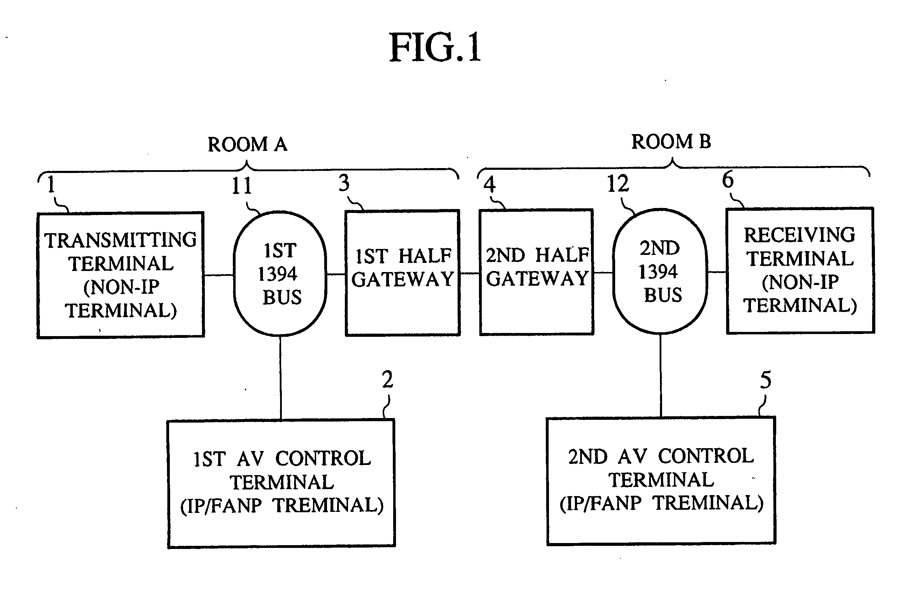

Referring now to Fig. 1 to Fig. 8, the first embodiment of the present invention will be described in detail.

Fig. 1 shows an exemplary overall configuration of a communication network system according to this first embodiment, which constitutes a home network within a home, for example.

As shown in Fig. 1, this home network comprises a transmitting terminal 1, a first AV (Audio Visual) control terminal 2, a first half gateway 3, a second half gateway 4. a second AV control terminal 5, a receiving terminal 6, a first 1394 bus 11, and a second 1394 bus 12. In this embodiment a transmission scheme between the half gateways 3 and 4 is assumed to be the ATM.

The transmitting terminal 1 and the receiving terminal 6 are non-IP terminals (also referred to as 1394 terminals hereafter), that is, terminals which can only understand the 1394 protocol (a protocol dedicated to 1394 such as AV/C protocol and IEC 1883, for example, and which cannot understand the Internet Protocol (IP). They may be the dedicated 1394 terminals.

This first embodiment is directed to a scheme of communication between terminals based on a control by the AV control terminal, in a case where these transmitting and receiving terminals are (or one of them is) the above described type that cannot understand the Internet protocol and a direct communication by the 1394 protocol cannot be carried out between them (such as a case where the 1394 buses are not bridge connected, that is, a case where a network other than the 1394 bus exists between them or a case where the public network such as the Internet or the ISDN exists between them).

Here, it is assumed that the two 1394 buses 11 and 12 are not directly bridge connected and the ATM network exists between them, so that, on a level of the 1394 protocol, a dedicated 1394 node connected to one 1394 bus cannot see another dedicated 1394 node connected to another 1394 bus.

In contrast, an IP terminal (also referred to as an IP node hereafter) based on the IP which is the inter-connection network protocol can recognize the other IP terminal connected to another bus even when they are terminals connected to these 1394 buses.

Assuming that the transmitting terminal 1 and the receiving terminal 6 are video terminals (as in a case where the transmitting terminal 1 is a DVD player and the receiving terminal 6 is a TV), for example, and that they are provided on the different 1394 buses, the problem is how to realize a communication between them.

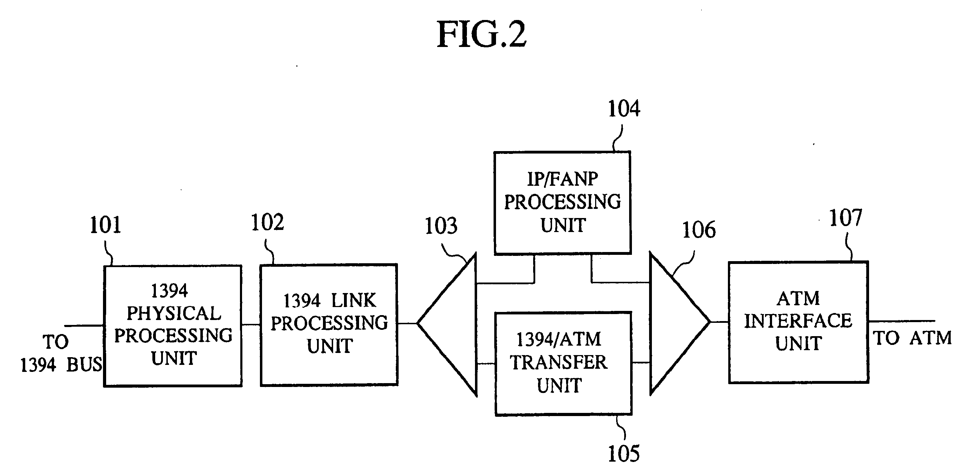

Fig. 2 shows an exemplary internal configuration of each of the half gateways 2 and 3. As shown in Fig. 2, the half gateway comprises a 1394 physical processing unit 101, a 1394 link processing unit 102, a first MUX/DEMUX 103, an IP/FANP processing unit 104, a 1394/ATM transfer unit 105, a second MUX/DEMUX 106, and an ATM interface unit 107.

The 1394 physical processing unit 101 and the 1394 link processing unit 102 carry out the physical layer processing, the link layer processing, the bus management and the transaction layer processing for a connected 1394 bus, as well as the exchanges of data (PDU (Protocol Data Unit) from a viewpoint of the 1394) with the IP/FANP processing unit 104 or the 1394/ATM transfer unit 105, using the 1394 frames to be transmitted or received that are passing through the first MUX/DEMUX 103 and the second MUX/DEMUX 106.

The IP/FANP processing unit 104 has functions for carrying out the routing based on the IP address, the routing table management, the FANP (Flow Attribute Notification Protocol) processing, the ARP (Address Resolution Protocol) processing, etc., for the received IP packets, FANP packets (which will be described below), ARP packets, etc. (For details concerning the FANP, see Japanese Patent Application No. 8-264496 (1996).

The 1394/ATM transfer unit 105 has a function for attaching a specific ATM header (VPI/VCI value) to data received from the 1394 side, especially data received through the isochronous channel by using its isochronous channel number or as a key or though the destination address with the specific register offset by using the information as a key, and transmitting it to the ATM side, and a function for transmitting data received from the ATM side to a specific isochronous channel or the destination address with the specific register offset on the 1394 side by using its header information (VPI/VCI information) as a key. Namely, the data forwarding at this processing unit is carried out by using only the datalink layer processing.

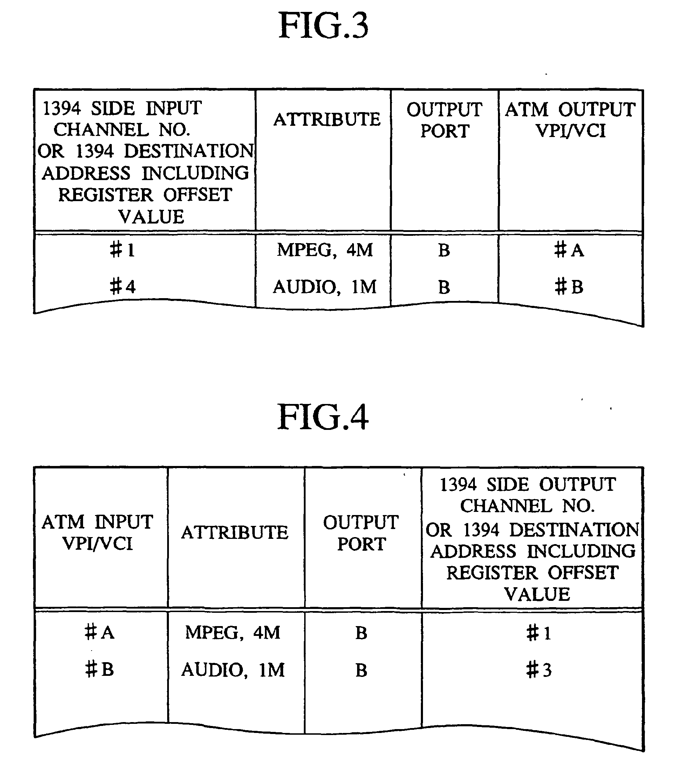

For example, a table of correspondence between the VPI/VCI value and the channel number of the isochronous channel of the 1394 bus or the destination address with the specific register offset is produced in a form of a correspondence table as shown in Fig. 3 (in a case of transmitting data received from the 1394 side to the ATM side) or Fig. 4 (in a case of transmitting data received from the ATM side to the 1394 side), for example. Here, the mapping (the production of each correspondence table) is made by the IP/FANP processing unit 104.

As for the data forwarding function, this function is equipped with a communication quality guarantee function by the FANP as will be described below, and the data scheduling scheme such as WFQ or WRR, for example, may also be implemented.

The ATM interface unit 107 is an interface with respect to the physically connected ATM network (the ATM cable in this embodiment), and carries out the cell assembling and disassembling of data to be exchanged with the second MUX/DEMUX 106 and the ATM cells. This ATM interface unit 107 may also carry out the ABR (Available Bit Rate) processing, the UPC (Usage Parameter Control) processing, SDH (Synchronous Digital Hierarchy) processing, etc.

Note here that, some VC is defined in advance as a default VC of the ATM between the half gateways 3 and 4, and the both half gateways 3 and 4 already recognize that the FANP messages will be exchanged through this default VC, as described in Japanese Patent Application No. 8-264496 (1996).

The first AV control terminal 2 and the second AV control terminal 5 are both IP nodes as well as FANP nodes and apparently capable of carrying out communications by the Internet protocol. As will be described below, these AV control terminals 2 and 5 can understand the 1394 protocol as well as the Internet protocol, and are capable of carrying out communications with local terminals on the 1394 bus by using the 1394 protocol as well as communications with local and remote IP terminals by using the Internet protocol.

In the following, it is assumed that the IP nodes in Fig. 1 are belonging to the same IP subnet.

On each of the AV control terminals 2 and 5, a "video transmission and reception control application" is implemented. This application has the following functions.
(1) A function for checking resources and services (such as nodes) on the own local bus, and communicating the obtained result with each other by using the Internet protocol.
(2) A function for indicating the resources and services of the terminals on the remote bus to the user according to the information obtained by (1), so as to urge the user to carry out operations on them, as well as exchanging these control information with each other.
(3) A function for exchanging FANP packets with each other and reserving a transmission path (a connection with the bandwidth, etc. reserved, if necessary) between the 1394 buses at which the AV control terminals are located.
(4) A function for carrying out the control of nodes on the local bus by using the 1394 protocol (such as AV/C protocol).

By using these AV control terminals, it becomes possible for the user to carry out the exchanges of data with terminals located on the remote 1394 bus, even when transmitting and receiving terminals are not the IP terminals.

The protocol for carrying out the control of AV devices on the 1394 regardless of whether they are local ones or remote ones as described above will be called a FANP-AV protocol here. This protocol may be an IP application.

For example, consider a case where the first 1394 bus 11 is provided at a room A within the home while the second 1394 bus 12 is provided at a room B within the home. Here, suppose that the user who is located in the room B tries to display video data from the transmitting terminal 1 located in the room A, on the receiving terminal 6 located in the room B.

Note that these two rooms may not necessarily belong to the same home. When they are not, there may be a public network between the two half gateways 3 and 4 (in which case they are not necessarily belonging to the same IP subnet so that the broadcast described below may not be carried out and they may recognize each other and their addresses by the manual setting).

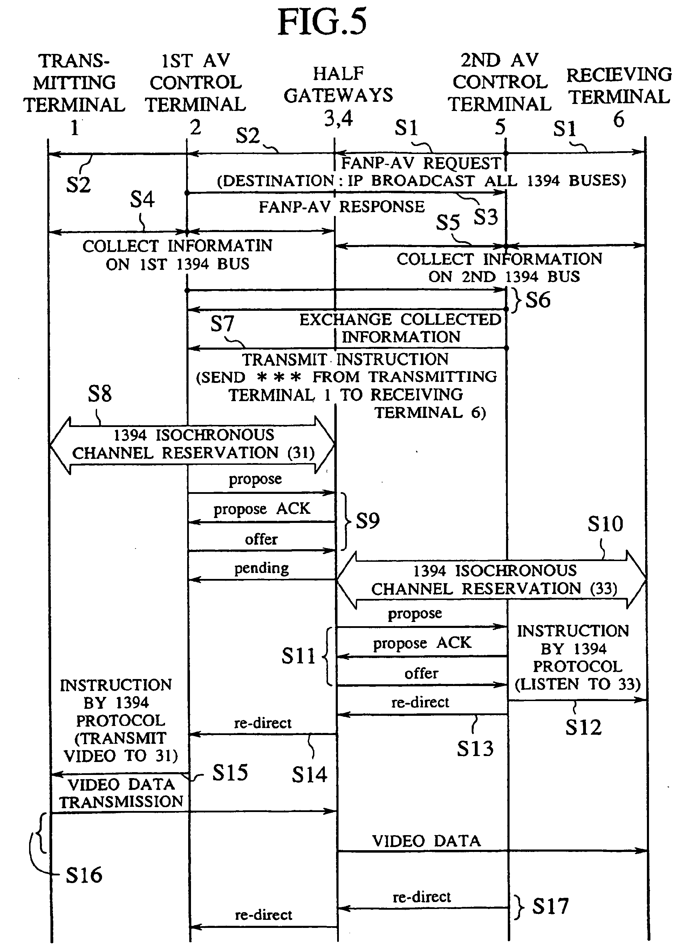

Now, with reference to the sequence chart of Fig. 5, the operation procedure (including the FANP-AV protocol) up to the video data exchange between the transmitting terminal 1 and the receiving terminal 6 which are the non-IP terminals will be described.

First, in the communication system of the present invention, the user activates the second AV control terminal 5 and carries out the necessary setting on this second AV control terminal 5. Namely, as shown in Fig. 5, the second AV control terminal 5 transmits a "FANP-AV request" packet to the entire home network, i.e. to the IP broadcast address, in order to check the presence/absence of a node for processing the FANP-AV protocol on the home network (step S1).

This packet is assigned with a well known port number which is allocated to the FANP-AV processing function in advance. This IP broadcast packet may be transmitted to a 1394 address called "bus broadcast address" on the second 1394 bus 12, that is, to the asynchronous channel in a form of broadcast with respect to all nodes in the home network of that home. This broadcast packet reaches to all nodes on the second 1394 bus 12. Note here that it is also possible to transmit this packet to a 1394 address called "local bus broadcast" as long as it is made such that this packet reaches to all nodes within that IP subnet. Namely, even when a network other than the 1394 bus is connected, it is sufficient if it is made such that this packet will be transferred.

Now, the second half gateway 4 that received this packet confirms that it is "broadcast with respect to all buses" from the destination 1394 address, and forwards this packet to the first half gateway 3 side. The first half gateway 3 that received this packet then forwards this packet to the first 1394 bus 11 (step S2). At this point, the destination 1394 address is the "bus broadcast address".

Here, a node which by itself is activating the FANP-AV protocol receives this packet (FANP-AV request packet), and confirms that it is the "FANP-AV request", that is, a packet for searching a node that is activating the FANP-AV protocol, by referring to the port number. Then, this node transmits a "FANP-AV response" packet indicating that "it is also activating the FANP-AV protocol" as a response to the received packet, to its source IP address (step S3). In Fig. 5, the first AV control terminal 2 is the FANP-AV protocol node, so that this terminal transmits the FANP-AV response packet to the second AV control terminal 5 which is the source of the "FANP-AV request" packet. At the same time, the first AV control terminal 2 stores the existence of the second AV control terminal 5 and its IP address.

Note that, as already noted above, instead of carrying out such an automatic constituent recognition, it is also possible for the AV control terminals to recognize each other by using a method in which each AV control terminal registers addresses of the other AV control terminals by the manual setting in advance.

Around this point, each FANP-AV node (AV control terminal 2, 5) collects information on AV devices existing on the 1394 bus to which it is connected, by using the 1394 protocol (step S4 and step S5). This operation may be realized by using protocols such as the AV/C protocol and the IEEE 1212 which are standardized by the 1394 trade association and the HD-DVTR conference, or their extended versions.

In this manner, each AV control terminal 2, 5 collects various information regarding AV devices on the 1394 bus to which it belongs, such as what AV devices they are, what contents they have, how many media they have, what 1394 addresses they have, etc., and store the collected information into an internal table.

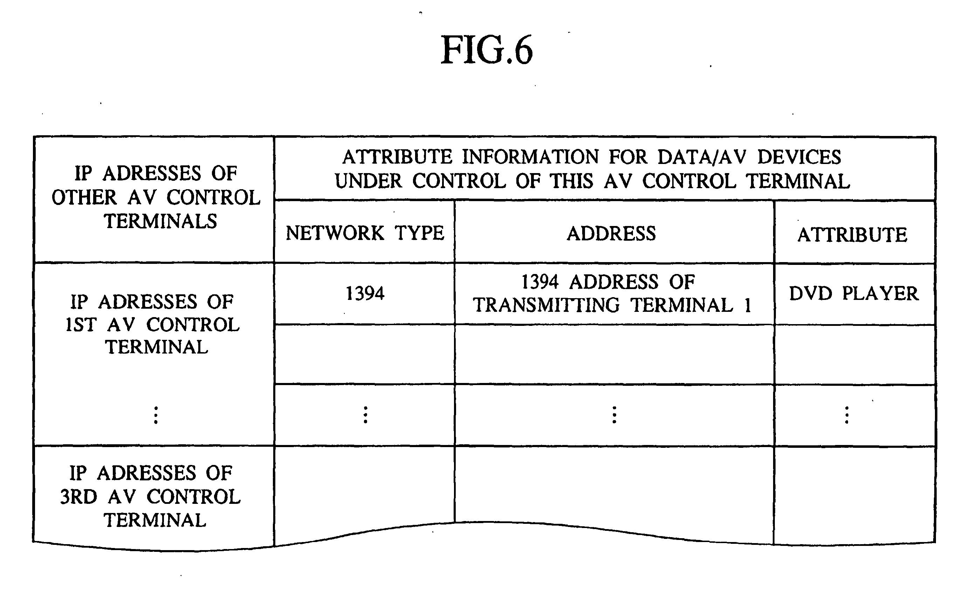

Next, the AV control terminals 2 and 5 exchange the collected information with each other (step S6). For this information exchange, each one transmits the collected information to the IP address of the other by using IP packets. As a result, in each AV control terminal 2, 5, a table with contents as shown in Fig. 6 is produced, for example. Namely, by carrying out this information exchange between the AV control terminals 2 and 5, each AV control terminal 2, 5 can collect various information (attribute information) regarding AV devices which are connected with a network to which the other AV control terminal belongs, such as what AV devices they are, what contents they have, how many media they have, what 1394 addresses they have, etc., in addition to the information regarding AV devices on the 1394 bus to which it belongs, on the table of Fig. 6.

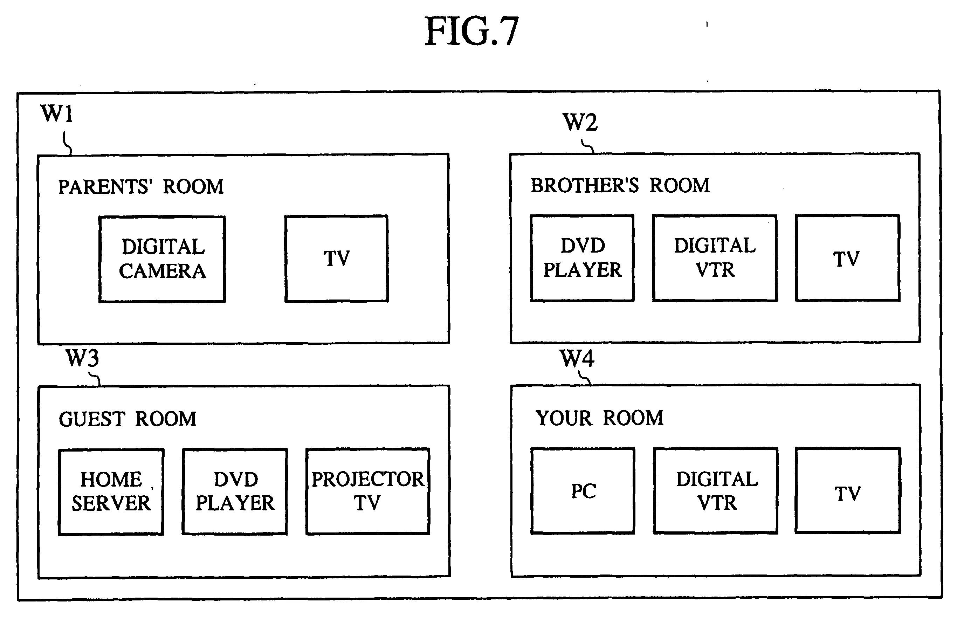

It is also possible to display the information on the table of Fig. 6 at a display screen of the AV control terminal 2, 5. Fig. 7 shows an exemplary screen display by a display device provided at the second AV control terminal 5. In Fig. 7, for the sake of clarity, under the assumption of one bus per one room (or one datalink network per one room), display windows (W1 to W4) within the display screen are set in correspondence to the respective rooms, and the screen display is presented in a form of an arrangement in each room. By looking at this, the user can make a judgement such as "to/from which terminal should data be transmitted/received".

For example, suppose that the user in the room B wishes to receive video data from the transmitting terminal 1 and display it on the receiving terminal 6. To this end, the user operates the second AV control terminal 5 so as to make a setting by which appropriate contents constituting the video at the transmitting terminal 1 are transmitted to the receiving terminal 6 and displayed there. This operation may be carried out through the GUI on the second AV control terminal 5. In response, the second AV control terminal 5 transmits an instruction with a content of "send appropriate contents constituting the video at the transmitting terminal 1 to the receiving terminal 6" to the first AV control terminal 2 (step S7). By means of this, the first AV control terminal 2 can ascertain the address of the transmitting terminal 1 which is the transmission destination in a form of the 1394 address.

The first AV control terminal 2 that received this instruction communicates with the transmitting terminal 1 by the 1394 protocol, and checks whether the video transmission is possible or not. In addition, the operation such as the authentication with respect to the second AV control terminal 5 may also be carried out.

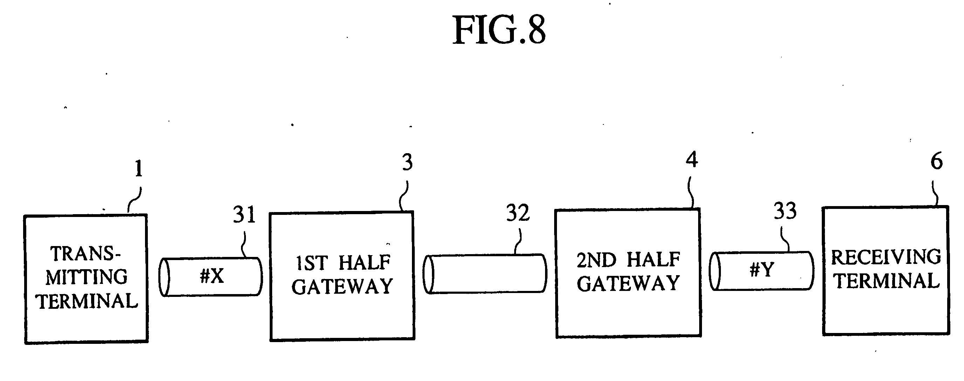

Next, the first AV control terminal 2 reserves the isochronous channel of the first 1394 bus 11 by using the 1394 protocol and the 1394 AV protocol, etc., at the first 1394 bus 11 (step S8). A channel number reserved at this point is assumed to be #X (the isochronous channel 31 of Fig. 8). Also, as should be apparent, the bandwidth necessary for the video transmission is to be reserved at the same time by acting on the isochronous resource manager of the first 1394 bus 11.

Next, the first AV control terminal 2 makes a setting with respect to the first half gateway 3 so that the isochronous channel #X will be received there. Then, the first AV control terminal 2 transmits the offer message of the FANP toward the first half gateway 3 through this isochronous channel (step S9).

Here, the FANP is the protocol described in Japanese Patent Application No. 8-264496 as already noted above. Namely, this protocol is used for the purpose of carrying out communications with a neighboring node that can interpret the FANP (which is usually provided at a middle of network segments that constitute the home network and plays a role of an inter-connection device for these plurality of segments), and notifying the identifier of the channel through which data are to be transmitted, their destination address, and their communication attribute and communication quality. It is also possible to use this protocol for the purpose of setting up an end-to-end connection.

Now, this offer message conveys a channel number (or a virtual channel identifier, etc.) by which data (a video data in this embodiment) are to be transmitted from now on, a destination address (an IP address in this embodiment) of that video data, the bandwidth to be used (communication quality), the communication attribute (such as a coding scheme like MPEG, etc.), an end-to-end ACK request, etc. Note that when the transmission channel number or virtual channel identifier is not shared by the terminals at both ends, the exchange of the propose message and the propose ACK message of the FANP may be exchanged between these ends. Also, the destination address (target IP address) of that data is the IP address of the second AV control terminal.

The first half gateway 3 that received this offer message confirms that the second AV control terminal 5 exists in a direction of the second half gateway 4 by referring to the internal routing table, and checks whether it is possible to support the bandwidth, communication quality, etc. requested by this offer message by referring to the idle bandwidth, etc., of a communication path inside the second half gateway 4. When it is judged that it is possible to support them, the propose message, the propose ACK message, the offer message, etc., are transmitted to the second half gateway 4 similarly as in the above processing. On the other hand, when it is judged that it is not possible to support them, a reject message is transmitted to the first AV control terminal 2.

The second half gateway 4 checks the internal communication resources (checks whether the communication quality described in the offer message is internally possible or not similarly as in the first half gateway 3), and establishes the isochronous channel #Y (the isochronous channel 33 of Fig. 8) on the second 1394 bus 12. Around this point, the second half gateway 4 commands the second AV control terminal 5 to take the contents of this isochronous channel, by using the 1394 protocol. After that; the exchanges of the propose message, the propose ACK message and the offer message are carried out between the second half gateway 4 and the second AV control terminal 5 (step S11).

The second AV control terminal 5 that received the propose message and the offer message recognizes that they are for the video transmission earlier requested by this second Av control terminal 5 to the first AV control terminal 2, according to the flow ID or the prescribed identifier agreed by both sides in advance. This prescribed identifier can be that which is conveyed by the FANP message.

Next, the second AV control terminal 5 commands the receiving terminal 6 to receive the data transmitted through the isochronous channel #Y, by using the 1394 protocol such as IEC 1883 (step S12). By means of this, the data transmitted through the isochronous channel #Y can be received by the receiving terminal 6.

After that, the second AV control terminal 5 transmits the re-direct message to the second half gateway 4 (step S13). This re-direct message is a message that bears the meaning that the setting offered by the offer message of the step S11 is accepted. When the offer message contains the end-to-end ACK request, the re-direct message is transmitted by setting the end-to-end ACK flag ON (where setting the end-to-end ACK flag ON implies that a route for transmitting the video data from the transmitting terminal 1 to the receiving terminal 6 has been set up). This ACK flag reaches to the transmitting terminal (the first AV control terminal 2 in this embodiment).

The second half gateway 4 that received this re-direct message makes an appropriate setting to the internal 1394/ATM transfer unit 105 (more specifically the setting of the corresponding table such as that shown in Fig. 3 or Fig. 4). Namely, the ATM virtual connection 32 (shown in Fig. 8) offered by the offer message at the step S9 and the isochronous channel #Y are switch connected at the datalink layer. More specifically, at the 1394/ATM transfer unit 105, the ATM cells entered from the ATM virtual connection 32 are transferred to the 1394 data and entered into the isochronous channel #Y, by referring to the VCI value directly, without any processing by the IP/FANP processing unit 104. At this point, the data/packet scheduling scheme in which the communication quality defined by the FANP can be maintained may be selected. Note that the,correspondence table inside the 1394/ATM transfer unit 105 which is to be referred at this point is that shown in Fig. 3 or Fig. 4.

The re-direct message returns from the second half gateway 4 to the first half gateway 3 (at which the setting of the 1394/ATM transfer unit 105 is made similarly as in the second half gateway 4), and then to the first AV control terminal 2 (step S14).

Here, the first AV control terminal 2 confirms that the datalink layer connection up to the final terminal as shown in Fig. 8 has been set up. Here, the final terminal is the receiving terminal 6 in this embodiment, but the receiving terminal 6 is the dedicated 1394 terminal and not a node that can understand the FANP and the IP. It is the second AV control terminal 5 that made the preparation such that the receiving terminal 6 can receive the video data, and the setting was made by this second AV control terminal 5 by using the 1394 protocol.

Then, the first AV control terminal 2 commands the transmitting terminal 1 to carry out the transmission of the corresponding appropriate video with respect to the isochronous channel with the channel number #X (the isochronous channel 31 of Fig. 8), by using the 1394 protocol (step S15).

The transmitted video reaches to the receiving terminal 6 through the isochronous channel 31 on the first 1394 bus 11, the ATM virtual connection 32, and the isochronous channel 33 on the second 1394 bus 12 (step S16). At the intermediate nodes (the half gateways 3 and 4), only the switching in the datalink layer is applied, so that the data transfer is carried out by maintaining the communication quality while the data pass through this route.

The transmission of the re-direct message for the purpose of connecting,this video transmission is carried out from the second AV control terminal 5 toward the upstream side (that is, through the second half gateway 4 and the first half gateway 3, to the first AV control terminal 2) (step S17).

Also, a request for interruption of the transmission from the user side (the transmission of the release message) is also sent from the second AV control terminal 5 in the similarly order. At this point, the first AV control terminal 2 carries out the control by the 1394 protocol such as AV/C protocol toward the transmitting terminal 1 so as to terminate the video transmission.

As described, according to the communication network system of this embodiment, the control of AV devices over a plurality of 1394 buses such as the video delivery, interruption, etc., from the transmitting terminal 1 to the receiving terminal 6 is carried out by the FANP and the FANP-AV, despite of the fact that the transmitting terminal 1 and the receiving terminal 6 are not the IP terminals (that is, through the AV control terminals 2 and 5).

In general, the implementation of the IP is said to be costly, but by using the scheme of the present invention, the control between AV devices in which the IP is not implemented and the control of connection over a plurality of 1394 buses can be carried out by the AV control terminals 2 and 5 in which the IP and the FANP are implemented, so that a simplification, a low cost implementation, and a centralized control can be realized for the system as a whole. In addition, it should be apparent that the same can be realized by exactly the same principle even when a plurality of FANP nodes exist between the half gateways. Consequently, it becomes possible to carry out the control between AV terminals on arbitrary 1394 buses, without requiring a long distance 1394 bus transfer or a complicated 1394 bridge protocol which are the drawbacks of the 1394 buses.

Note that, in this embodiment, it is assumed that the AV control terminals 2 and 5 carry out communications with each other by using the IP, but it is also possible to realize this feature by using the other network layer technology (such as Netware. CLNP (Connection-Less Network Protocol). etc.) or the other technology such as I-PNNI (Integrated P-NNI), instead of the IP.

Also, in this embodiment, the set up of the connection (channel) between the AV control terminals 2 and 5 is made by using the protocol called FANP, but it is easily possible to realize this feature by using the other connection set up protocol such as RSVP (Resource Reservation Protocol), ST2 (Stream Transport Protocol-2), or I-PNNI, instead of the FANP.

Also, in this embodiment, it is assumed that the network to which the transmitting terminal 1 and the receiving terminal 6 are connected is the IEEE 1394 bus, but it is also possible to use FDDI2 or the broadcast based network such as home ATM-LAN as described in Japanese Patent Application No. 8-108015 (1996), in substantially the same manner as described above. Moreover, it is also possible to use a network which is not broadcast based, by modifying the AV control terminal to also carry out the connection set up between the half gateways and the transmitting/receiving terminals in a manner of the third party set up.

Also, in this embodiment, it is assumed that the AV control terminal 2, 5 and the half gateway 3, 4 are provided in separate bodies, but they may be provided within the same body. Namely, when the AV control terminal 2 and the half gateway 3 are provided in an identical body while the AV control terminal 5 and the half gateway 4 are provided in an identical body, it is possible to regard the half gateways 3 and 4 themselves as incorporating the functions of the AV control terminals 2 and 5.

Also, in this embodiment, a scheme in which the information regarding AV devices on local buses is exchanged between the AV control terminals 2 and 5 has been described, but when a number of AV control terminals increases, this information exchange may be carried out by using mesh connections among the AV control terminals. It is also possible to use a scheme in which one AV control terminal functioning as a server distributes the information to the other AV control terminals, or the hybrid of these schemes in which some AV control terminal aggregates the information for a plurality of AV control terminals and notifies the aggregated information to the other AV control terminals.

Also, in this embodiment, when the user is operating the AV control terminal, the resulting control process may be displayed on a display device provided at the receiving terminal 6.

### <Second Embodiment>

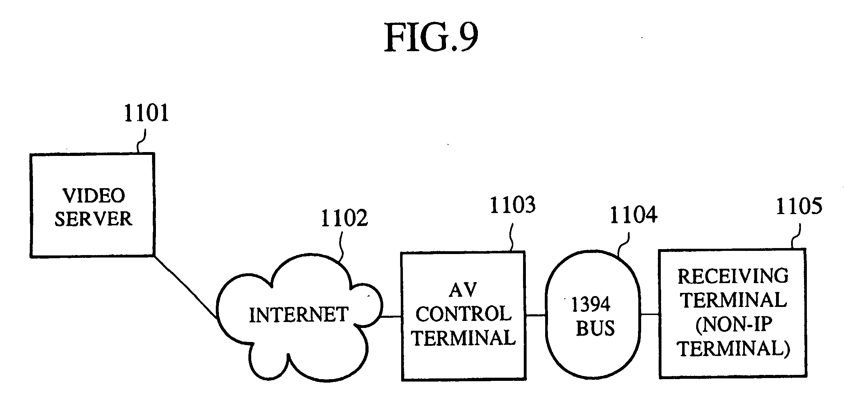

Referring now to Fig. 9 to Fig. 17, the second embodiment of the present invention will be described in detail.

This second embodiment is directed to a case where the end-to-end data transmission is controlled by the signaling protocol of the network layer such as RSVP, ST2, etc., and the data exchanges with a network of that network layer are to be carried out.

Fig. 9 shows an exemplary overall configuration of a communication network system according to this second embodiment, In Fig. 9, an AV control terminal 1103 is connected to the Internet 1102 (or arbitrary network), and connected with a receiving terminal 1105 through a 1394 bus 1104. Then, the video data delivery from a video server 1101 connected to the Internet 1102 is to be carried out with respect to the receiving terminal 1105, for example.

The video server 1101 is the Internet terminal which transmits the video data on IP packets, that is, in the format of MPEG-over-IP. For example, this video server 1101 may carry out the transmission of the TS (Timestamp) of the MPEG by RTP.

The AV control terminal 1103 is connected between the Internet 1102 and the 1394 bus 1104, and has functions for carrying out a control to the Internet 1102 side, a control to the 1394 bus 1104 side, and transmitting data from one network to another network by matching communications from both. This AV control terminal 1103 may be provided in a form of a unit called set-top box.

The receiving terminal 1105 is a non-IP terminal that can understand the 1394 protocol only, which carries out the video data reception. Consequently, the reception of MPEG data must obey the data format of MPEG-over-1394 as defined by the IEC 1883, for example.

As described above, in this embodiment, it is assumed that the video data transfer from the video server 1101 is realized by the transmission in the format of MPEG-over-IP through the Internet 1102. In order to carry out this video data transmission by maintaining the communication quality while being in the Internet 1102, the communication quality is guaranteed by the RSVP inside the Internet 1102. Here, of course, the guarantee may be made by the ST2 or the FANP, although this embodiment describes a case of using the RSVP.

Now, a procedure for transmitting the video data from the video server 1101 to the receiving terminal 1105 which is not the IP terminal in the communication network system of Fig. 9 will be described.

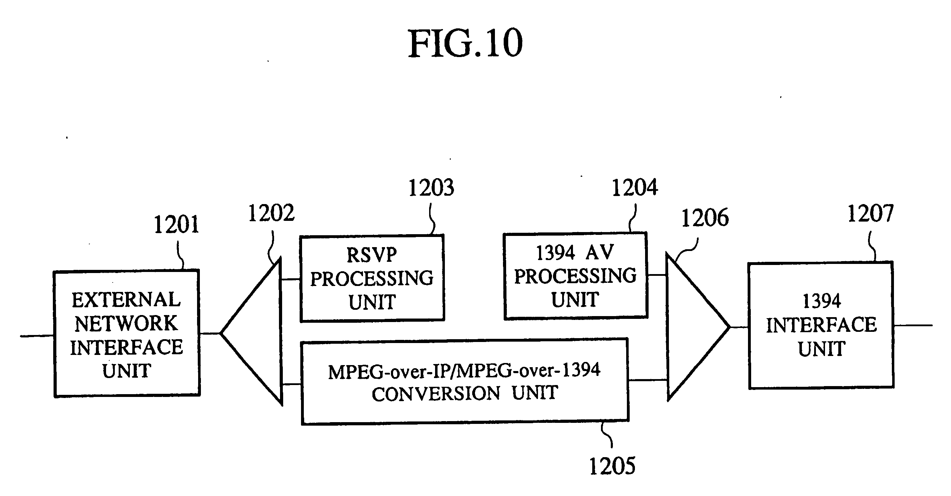

Fig. 10 shows an exemplary internal configuration of the AV control terminal 1103. As shown in Fig. 10, the AV control terminal 1103 comprises an external network interface unit 1201, a first MUX/DEMUX 1202, an RSVP processing unit 1203, a 1394 AV processing unit 1204, an MPEG-over-IP/MPEG-over-1394 conversion unit 1205, a second MUX/DEMUX 1206, and a 1394 interface unit 1207.

The external network interface unit 1201 is an interface with respect to the Internet 1102, which is an interface on the datalink layer and the physical layer in particular, and which transmits the received data to the RSVP processing 1203 or the MPEG-over-IP/MPEG-over-1394 conversion unit 1205 through the first MUX/DEMUX 1202 according to the need.

The RSVP processing unit 1203 has a function for reserving a route that guarantees the communication quality between the AV control terminal 1103 and an arbitrary terminal (the video server 1101 in this embodiment) connected to the Internet 1102 by carrying out the RSVP processing, and a function for carrying out the IP processing.

The 1394 AV processing unit 1204 has a function for carrying out the processing of the 1394 AV protocol (AV/C protocol. IEC 1883, etc.) or the FANP-AV protocol described in the first embodiment, through the 1394 bus 1104.

The MPEG-over-IP/MPEG-over-1394 conversion unit 1205 has a function for converting the MPEG frames entered from the Internet 1102 in the MPEG-over-IP format into the MPEG-over-1394 format and transmitting them. Of course, it may also has a function for converting in the opposite direction. This format conversion may be carried out by referring to the source address, destination address, port number, flow labels, etc., of the arrived IP packet, or in a case where the Internet is the virtual connection type network, this format conversion may be carried out by referring to the virtual channel identifier or channel number, etc. In this embodiment, the processing of the latter case will be described as an example.

The 1394 interface unit 1207 is an interface with respect to the 1394 bus 1104, and more specifically, has functions for carrying out the physical layer processing, the link layer processing, the transaction layer processing and the bus management.

The AV control terminal in a configuration shown in Fig. 10 is for a case where the receiving terminal 1105 has the MPEG reproduction function (MPEG decoding function). In addition, the AV control terminal 1103 may also have a function (including analog circuits, etc.) generally called set-top box.

The user acts on the AV control terminal 1103 when the user wishes to receive the video data from the video server 1101 at the receiving terminal 1105. Namely, the user makes the setting with respect to the AV control terminal 1103, as to which video should be sent from which video server and at which receiving terminal it should be received (watched).

At this point, instead of requiring the user to act directly on the AV control terminal 1103, the system may have a configuration in which, when the user acts on the other terminal, a control message is sent from that other terminal to the AV control terminal so as to request a subsequent series of control operations.

The AV control terminal 1103 requests the video data transmission to the video server 1101 which is the IP node, by using the IP protocol. This operation may be realized through a protocol such as HTTP. Also, this operation may be realized in a form in which the control protocol such as DSM-CC defined by the ITU-T and DAVIC flows over the Internet.

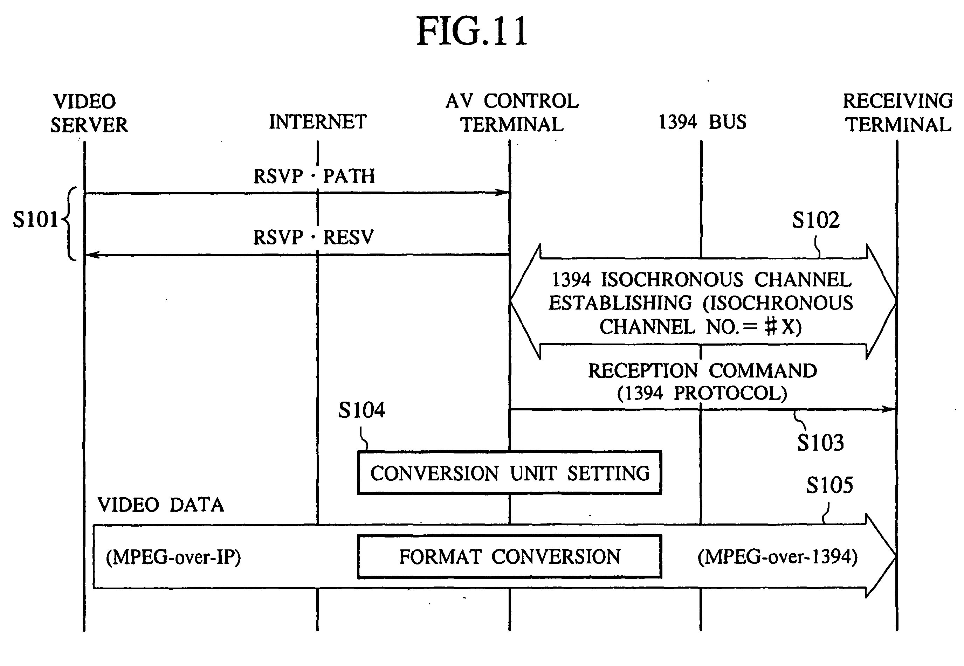

At this point, it is also possible to use a scheme in which the PATH message of the RSVP is flowing from the video server 1101 and the AV control terminal 1103 sends the RESV message of the RSVP in response so as to establish a route guaranteeing the QOS between the video server 1101 and the Av control terminal 1103 (step S101 of Fig. 11).

In addition, the AV control terminal 1103 establishes, the isochronous channel (channel number #X) on the 1394 bus with respect to the receiving terminal 1105, and transmits a message for commanding the reception of data from this isochronous channel by using the 1394 protocol such as IEC 1883, AV/C protocol, or 1394-1995 (step S102 and step S103 of Fig. 11).

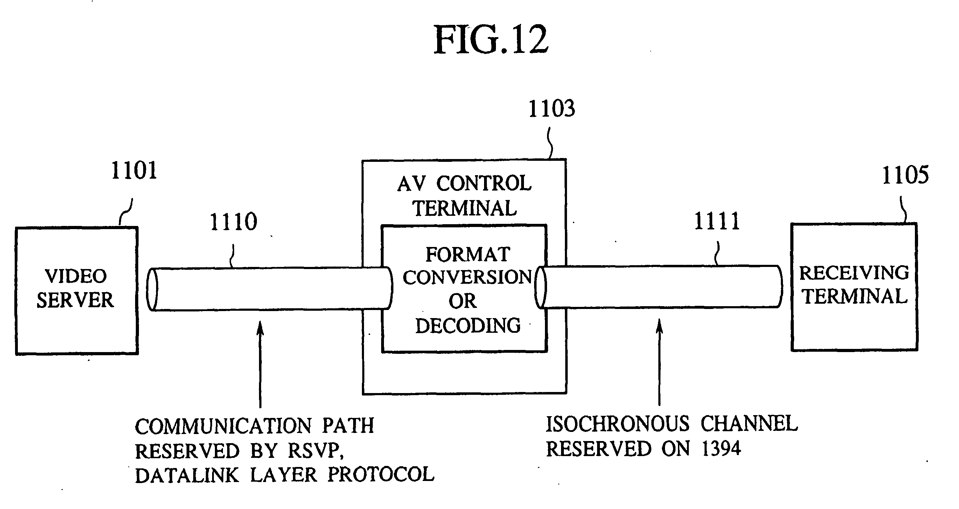

Along with that, the setting of the MPEG-over-IP/MPEG-over-1394 conversion unit 1205 is made, that is, the setting by which a packet in the MPEG-over-IP format entered from the Internet 1102 is taken out according to its header information (an identifier of the datalink layer connection through which this packet passes, or the IP header information, or the flow label, etc.), converted into the data format of the MPEG-over-1394, and transmitted to the prescribed isochronous channel #X (the isochronous channel 1111 of Fig. 12) on the 1394 bus 1104 (step S104). This setting may be made in a form which guarantees the communication quality such as jitter or delay time.

By means of this, a route 1110 and 1111 (a route with the communication quality guaranteed) from the video server 1101 to the receiving terminal 1105 as shown in Fig. 12 is reserved.

Here, the MPEG packet among the packets that passed through the Internet 1102 is forwarded to the MPEG-over-IP/MPEG-over-1394 conversion unit 1205, and an information for triggering the format conversion there may be the VPI/VCI value that carries this MPEG data, when the access datalink of the Internet 1102 is the ATM, for example. In this case, there is no need to bring this processing up to the IP layer.

Also, when the access datalink is the STM network, the format conversion may be triggered by an input from its channel number/specific time-slot, etc. In this case, there is no need to bring this processing up to the IP layer either.

Also, the format conversion may be triggered by using a part of the header information of the IP packet (such as "destination address + port number", the flow label of the IPv6, etc.).

The MPEG data are transmitted from the video server 1101 in the format of MPEG-over-IP, so that the AV control terminal 1103 converts them into the MPEG-over-1394 format at the MPEG-over-IP/MPEG-over-1394 conversion unit 1205 and then transmits them to the receiving terminal 1105 (step S105).

In this manner, the reception of the video data transmitted by the IP can be realized even at the receiving terminal which is not the IP terminal (the receiving terminal 1105 in this embodiment).

Note that the 1394 bus 1104 portion may be replaced by a group of bridge connected 1394 buses, or a network formed by mixed networks of the 1394 buses and other networks in which the 1394 bus is emulated.

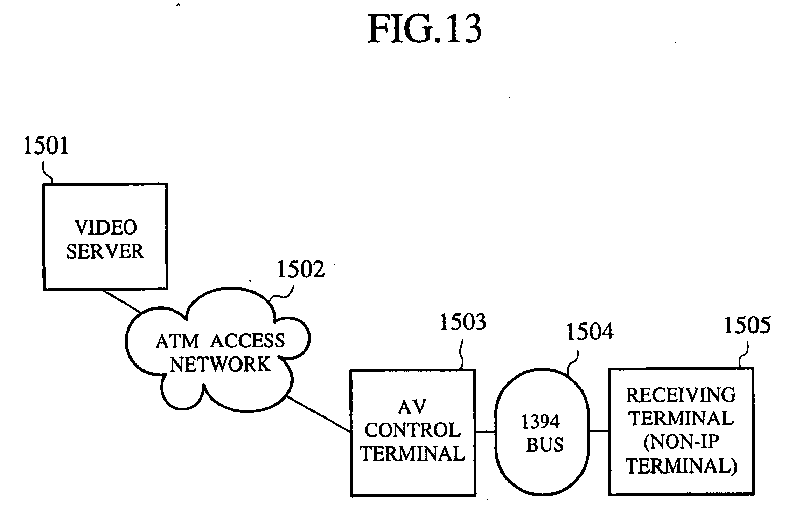

It is also possible to use the ATM access network as the access network to the home instead of the Internet 1102. Fig. 13 shows an exemplary overall configuration of the communication network system in such a case, which differs from Fig. 9 in that the Internet 1102 of Fig. 9 is replaced by an ATM access network 1502.

Note that, in this case, in Fig. 13, the AV control terminal 1503 and/or the video server 1501 may be the ATM terminal (a terminal that can understand and process only the ATM-API), so that the exchange between the AV control terminal 1503 and the video server 1501 will involve the call set up by the ATM signaling, etc.

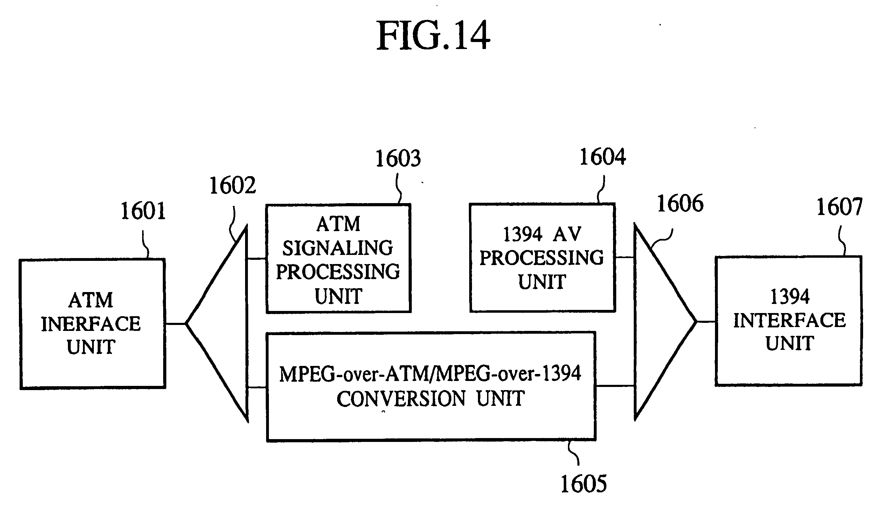

Fig. 14 shows an exemplary internal configuration of the AV control terminal 1503. As shown in Fig. 14, the format conversion is made between the MPEG-over-ATM format and the MPEG-over-1394 format at the MPEG-over-ATM/MPEG-over-1394 conversion unit 1605. Here, the MPEG-over-ATM format may be in a form according to the protocol defined by the AMS of the ATM forum.

The call set up by the ATM signaling between the AV control terminal 1503 and the video server 1501 is to be carried out at an ATM signaling processing unit 1603.

The functions of the other elements of Fig. 14 are the same as those of Fig. 10.

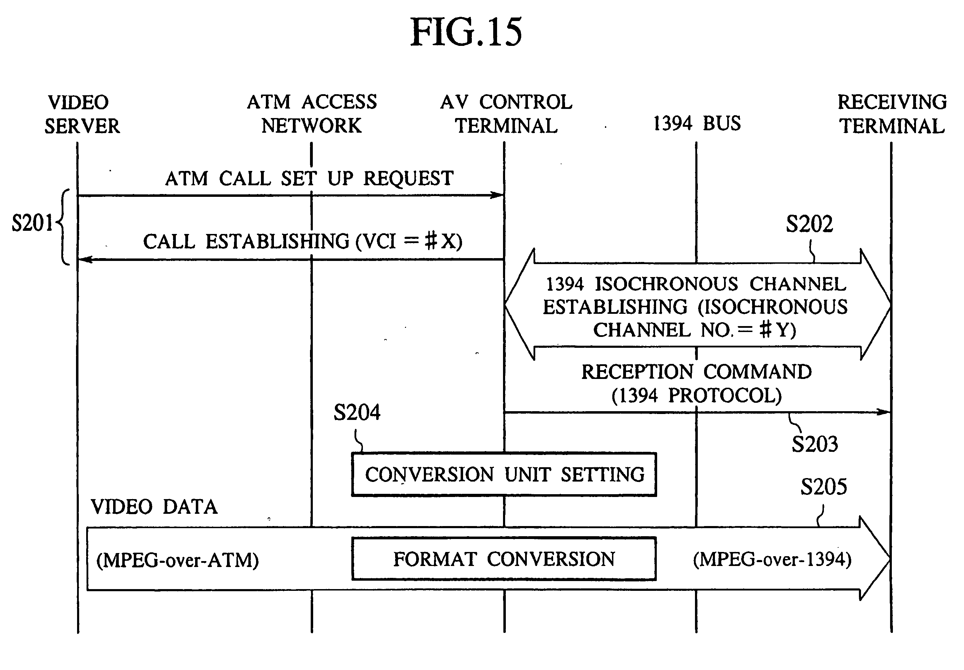

Fig. 15 shows a sequence chart for the operations of the communication network system of Fig. 13 as a whole. Fig. 15 differs from Fig. 11 in that the virtual connection (VCI = #X) for carrying out the call set up by the ATM signaling is established at a time of establishing a route between the video server 1501 and the AV control terminal 1503 at the step S201 of Fig. 15 (which corresponds to the step S101 of Fig. 11). The other parts of Fig. 15 are substantially the same as Fig. 11.

Note that, in this embodiment, an example in which the network inside the home is formed by the 1394 bus has been described, but the scheme of the present invention is equally applicable to a case where the network inside the home is not the 1394 bus but the other network technology (such as the ATM, etc.).

The above embodiment is directed to an exemplary case in which the MPEG decoder is provided at the receiving terminal side. However, it is also possible to consider a case in which the MPEG decoder does not exist on the receiving terminal side and the receiving terminal only has a function for receiving the raw video data directly and displaying them.

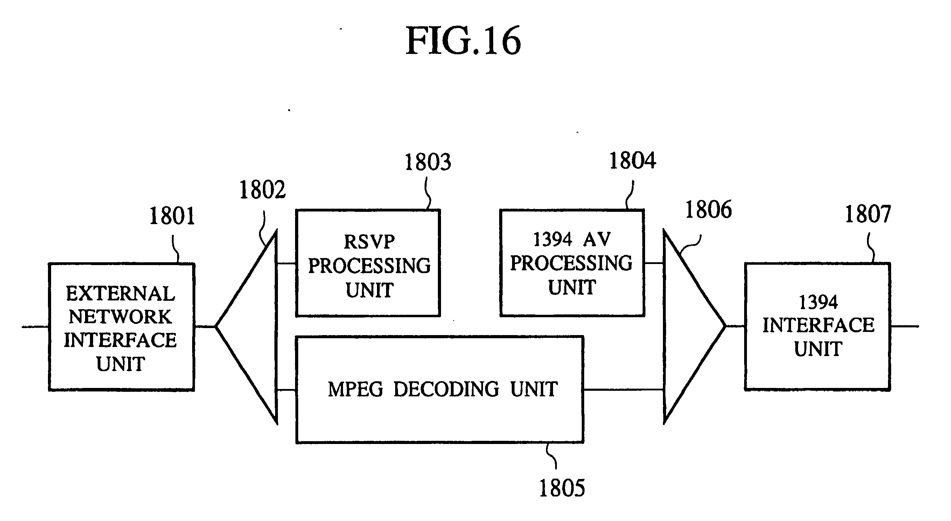

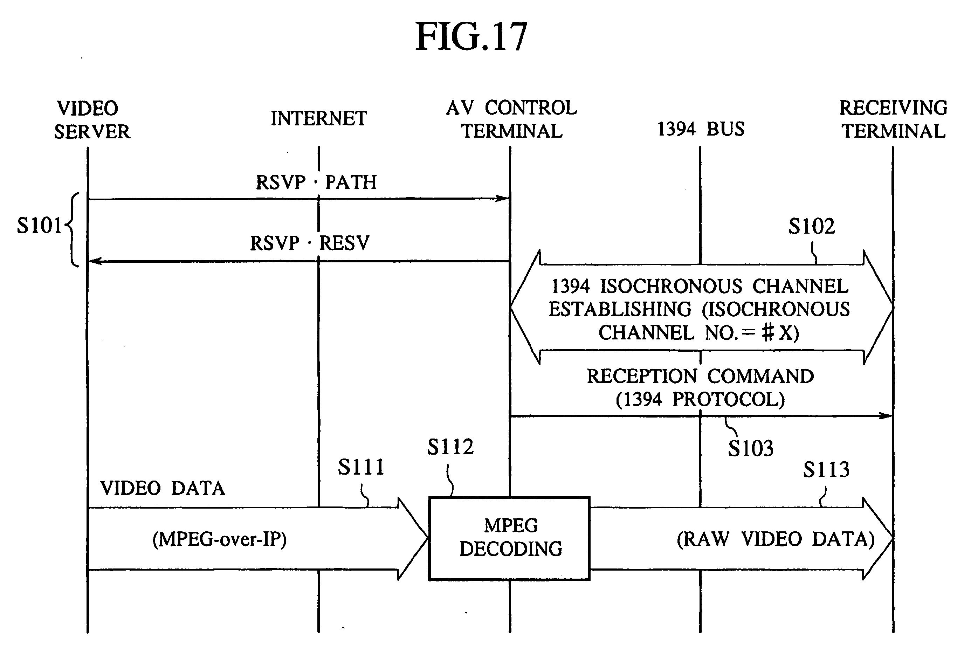

In such a case, in the communication network system of Fig. 9, for example, instead of carrying out the format conversion at the AV control terminal 1103, it is also possible to use a configuration in which, as shown in Fig. 16, an MPEG decoding unit 1805 is provided inside the AV control terminal 1103 and the MPEG decoding is carried out inside the AV control terminal 1103 for the MPEG-over-IP data (or the MPEG-over-ATM data, etc.) entered into the AV control terminal 1103. and the raw video data after the MPEG decoding are transmitted to the receiving terminal 1105 through the 1394 bus 1104. Fig. 17 shows the operation sequence in this case. Namely, Fig. 17 differs from Fig. 11 in that the step S104 to S105 of Fig. 11 are replaced by the step S111 to S113 in Fig. 17. where the format conversion is not carried out but the MPEG decoding of the MPEG-over-IP data (or the MPEG-over-ATM data, etc.) is carried out at the MPEG decoding unit 1805 and the raw video data are transmitted to the receiving terminal 1105 through the isochronous channel #X on the 1394 bus 1104 (step S111 to step S113 of Fig. 17).

By means of this, the high level functions such as the MPEG decoding are concentrated to the AV control terminal 1103, so that there is a merit in that a load on the receiving terminal 1105 can be reduced.

Also, Fig. 9 uses the Internet between the video server 1101 and the AV control terminal 1103, but the scheme of the present invention is of course not limited to a case of using the Internet and equally applicable to a case of using the other network configuration such as ATM network, SDH network, FTTH, etc.

Note that, as a configuration of the AV control terminal 1103. it is also possible to consider a configuration which is capable of processing a plurality of MPEG streams simultaneously. In this case, it is also possible to adopt the processing scheme in which the different processings are applied to different streams, as in a case of applying the MPEG decoding to one MPEG stream while applying the format conversion from the MPEG-over-IP to the MPEG-over-1394 to another MPEG stream, for example. In such a case, it suffices to provide a plurality of MPEG decoders, MPEG encoders, or conversion units inside the AV control terminal 1103.

### <Third Embodiment>

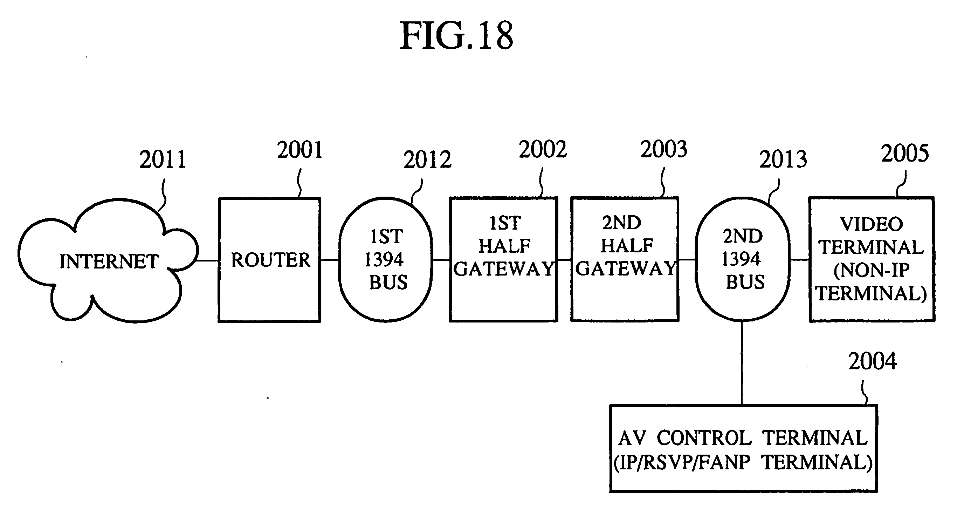

Referring now to Fig. 18 to Fig. 25, the third embodiment of the present invention will be described in detail.

Fig. 18 shows an exemplary overall configuration of a communication network system according to this third embodiment. As shown in Fig. 18, the communication network system of the third embodiment comprises a router 2001, a first half gateway 2002, a second half gateway 2003, an AV control terminal 2004, a video terminal 2005, an Internet 2011, a first 1394 bus 2012, and a second 1394 bus 2013.

In Fig. 18, a network formed by the router 2001 and elements on the right side of the router 2001 (that is, the router 2001, the first 1394 bus 2012, the first half gateway 2002, the second half gateway 2003, the second 1394 bus 2013, the AV control terminal 2004, and the video terminal 2005) may be a home network constructed within the home.

Also, in this embodiment the video terminal 2005 is a non-IP terminal, similarly as in the first embodiment.

Here, a case of receiving video data (assumed to be transmitted in the MPEG-over-IP format) from a video server (not shown) on the Internet 2011 at the video terminal 2005 which is the non-IP terminal will be considered.

Note that it is the AV control terminal 2004 that directly negotiate with the Internet or the video server by the IP, similarly as in the second embodiment.

This third embodiment differs from the second embodiment in that it is the second half gateway 2003 rather than the AV control terminal 2004 that carries out the control of transfer from the MPEG-over-IP to the MPEG-over-1394. Here, the control of transfer may be carried out by the first half gateway 2002 or the router 2001 instead of the second half gateway 2003, but a case where the control of transfer is carried out by the second half gateway 2003 will be described in this embodiment.

To this end, the AV control terminal 2004 is connected with the second 1394 bus 2013, but unlike the first embodiment, it is not absolutely necessary for this AV control terminal 2004 to be located on a path from the Internet 2011 to the video terminal 2005.

Also, here, the second half gateway 2003 may appear as a set-top box from a viewpoint of the video terminal 2005.

Also, in this embodiment, the bandwidth control between the subnets of the Internet (that is, at a boundary between one IP subnet and another IP subnet) is to be carried out by the RSVP, and the FANP described in the first embodiment is to be used within the subnet (that is, a portion of the elements on the right side of the router 2001). Consequently, the router 2001 and the AV control terminal 2004 are RSVP nodes while the router 2001, the first half gateway 2002, the second half gateway 2003, and the AV control terminal 2004 are FANP nodes.

The transmission scheme between the half gateways 2002 and 2003 is assumed to be the ATM similarly as in the first embodiment.

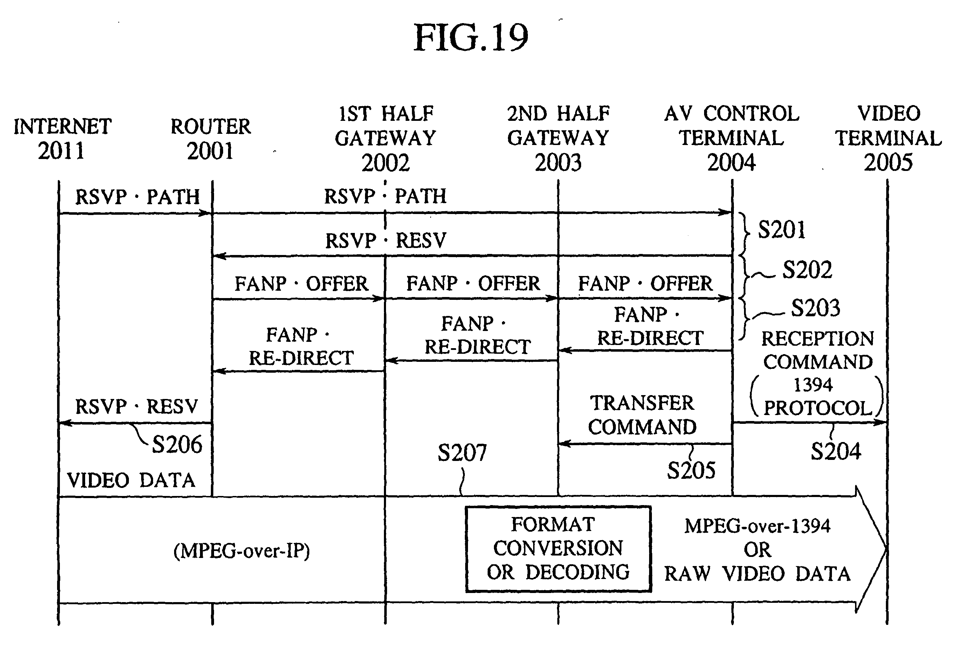

Now, with reference to Fig. 19, the video data transmission sequence will be described.

A user who wishes to receive the video transmitted from the Internet at the video terminal 2005 makes a program request by operating the AV control terminal 2004 similarly as in the second embodiment. Here, an actual operation screen may be displayed on a display device provided in the video terminal 2005. Also, at a time of this reservation, the reservation of the communication resources using the RSVP may also be carried out in order to receive the video program at a high communication quality. Consequently, the reservation of the communication resources by using an RESV message of the RSVP is carried out with respect to a PATH message of the RSVP transmitted from the Internet 2011 side (step S201). Note that the half gateways 2002 and 2003 are not the RSVP nodes so that the RSVP messages simply pass through them.

The router 2001 that received the RESV message reserves the connection and the communication resources on a route from the router 2001 to the AV control terminal 2004 by using the FANP described in the first embodiment. At this point, the fact that data to be transferred by the FANP are MPEG data may be notified to each node.

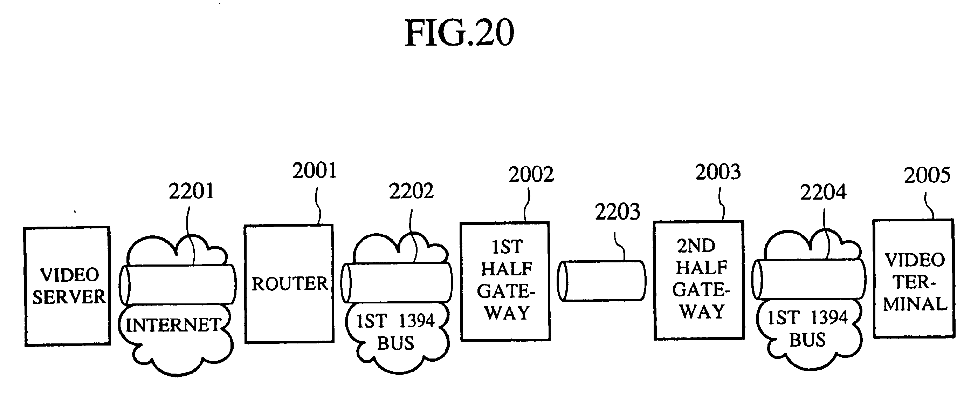

Here, suppose that the reserved communication resources includes, as shown in Fig. 20, an isochronous channel 2202 on the first 1394 bus, a connection 2203 between the half gateways 2002 and 2003, and an isochronous channel 2204 on the second 1394 bus. Here, the isochronous channel 2204 on the second 1394 bus is the broadcast on the second 1394 bus because of the property of the 1394 bus.

Now, the AV control terminal 2004 receives the FANP offer message transmitted from the router 2001 (step S202). and returns the FANP re-direct message (step S203) so as to permit the connection establishing. Also, around this point, the following two operations are carried out by the AV control terminal 2004.

The first operation is to command the video terminal 2005 to receive the isochronous data at the isochronous channel 2204, by using the 1394 protocol (step S204). By means of this, a state in which a connection with the communication quality guaranteed is established from the router 2001 to the video terminal 2005 of Fig. 20 is substantially realized.

The second operation of the AV control terminal 2004 is to command the second half gateway 2004 to carry out the format conversion from the MPEG-over-IP to the MPEG-over-1394 (step S205). Here, the MPEG-over-1394 format may be a format defined by IEC 1883, etc. In this case, the fact that the second half gateway 2003 has the transfer function in advance may be already recognized by the AV control terminal 2004, or some protocol for the purpose of checking the presence/absence of the transfer function may run through the network.

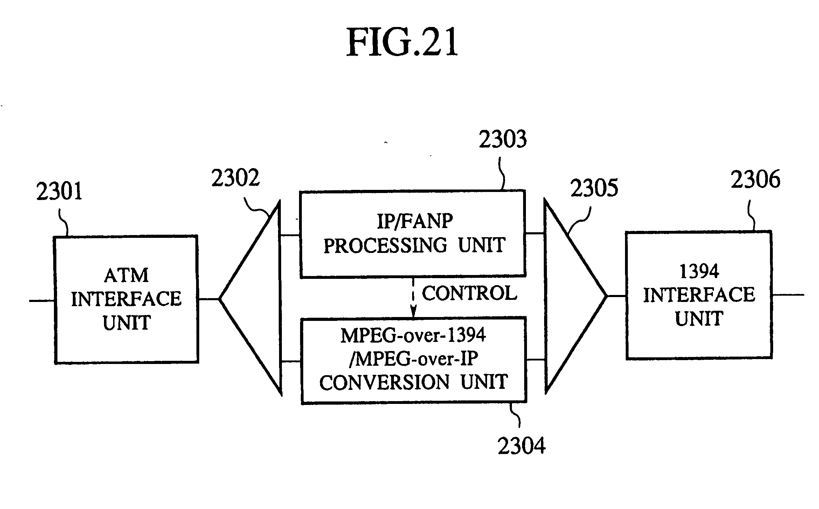

This transfer command may be made in a form of the IP application, or in a form of the 1394 application. For this reason, the second half gateway 2003 has an internal function for transferring from the MPEG-over-IP to the MPEG-over-1394 (the MPEG-over-1394/MPEG-over-IP conversion unit 2304 of Fig. 21).

The internal configuration of the second half gateway 2003 shown in Fig. 21 differs from the internal configuration of the half gateway in the first embodiment in that the MPEG-over-1394/MPEG-over-IP conversion unit 2304 is included in the second half gateway 2003, and that the IP/FANP processing unit 2303 has a function for making a setting of the MPEG-over-1394/MPEG-over-IP conversion unit 2304 according to a "transfer command" signal at the step S205 in the sequence of Fig. 19, so that the format conversion from the MPEG-over-IP to the MPEG-over-1394 will be carried out for appropriate input IP packets on which the MPEG data are mounted.

Now, the RESV message of the RSVP that reached to the router 2001 flows further to an upstream side and reaches to the video server (now shown) (step S206). At this point, the end-to-end connection with the communication quality guaranteed is established from the video server to the video terminal 2005 as shown in Fig. 20. Here, prior to the video data transmission, some notification signal (a signal for urging the video data transmission) may be sent from the AV control terminal 2004 to the video server.

After that, the transmission of the video data from the video server is started (step S207). The video data pass through the connection set 2201 on the IP of Fig. 20, and reaches to the video terminal 2005 through the connections 2202, 2203 and 2204 established by the FANP. Note here that the format conversion from the MPEG-over-IP format to the MPEG-over-1394 format is carried out at the second half gateway 2003.

The above description is directed to a case where the video terminal 2005 has the MPEG decoder. In contrast, in a case where the video terminal 2005 does not have the MPEG decoder and is in a configuration for receiving and reproducing the raw video data, it is also possible to use a configuration in which the MPEG decoder is provided in the second half gateway 2003 so that the MPEG decoding from the MPEG-over-IP is carried out and the obtained raw video data are transmitted to the video terminal 2005. In this configuration, there is no need to implement the expensive MPEG decoder in the video terminal 2005, so that there is a merit in that a construction of a low cost system becomes possible.

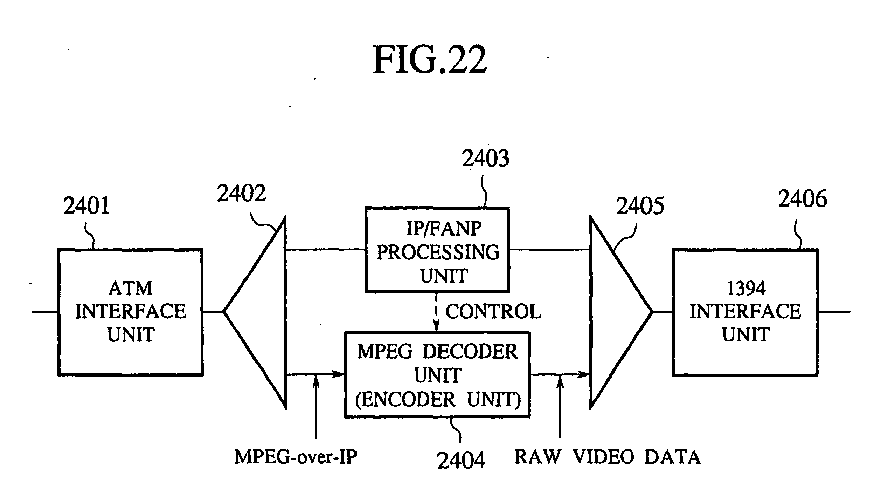

Fig. 22 shows an exemplary internal configuration of the second half gateway 2003 in this case. This configuration of Fig. 22 differs from that of Fig. 21 in that the MPEG decoder unit 2404 is provided instead of the MPEG-over-1394/MPEG-over-IP conversion unit 2304 of Fig. 21.

At the MPEG decoder unit 2404, the MPEG decoding may be carried out when a command signal for commanding the decoding of the MPEG data is sent from the AV control terminal 2004 to the second half gateway 2003.

Here, in a case of carrying out the MPEG format conversion or the MPEG decoding, the format conversion or decoding processing may be carried out by implicitly recognizing that data contents are MPEG data from the value of the datalink identifier (VPI/VCI value in a case of the ATM, for example) between the two half gateways 2002 and 2003, without carrying out the IP layer processing. In this manner, it is possible to start the MPEG format conversion processing or the MPEG decoding processing by omitting the IP processing which is generally said to be costly, so that the quick processing and the low cost can be realized simultaneously.

Note that, as should be apparent, the system in such a configuration is applicable not only to a case of receiving video from the Internet but also to a case of the video data transmission by the MPEG-over-ATM when the access network is the ATM network as in the second embodiment, or to cases using any other transmission schemes.

Also, the transmission of video data (or data in general) is not necessarily limited to the MPEG, and any coding scheme can be used.

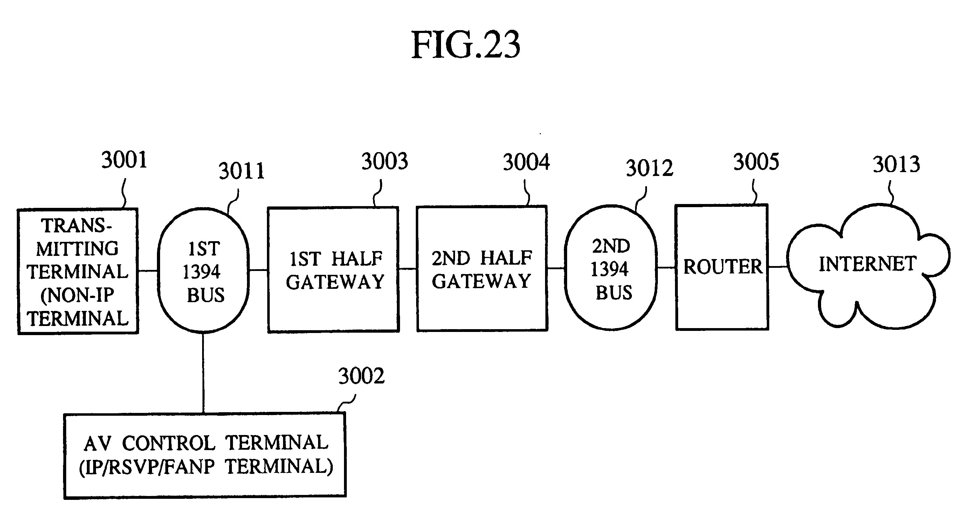

Also, the above operations can be utilized for the information transmission from the home. Namely, in the communication network system with a configuration as shown in Fig. 23, consider a case of transmitting the raw video data or MPEG data from the transmitting terminal 3001 which is the non-IP terminal.

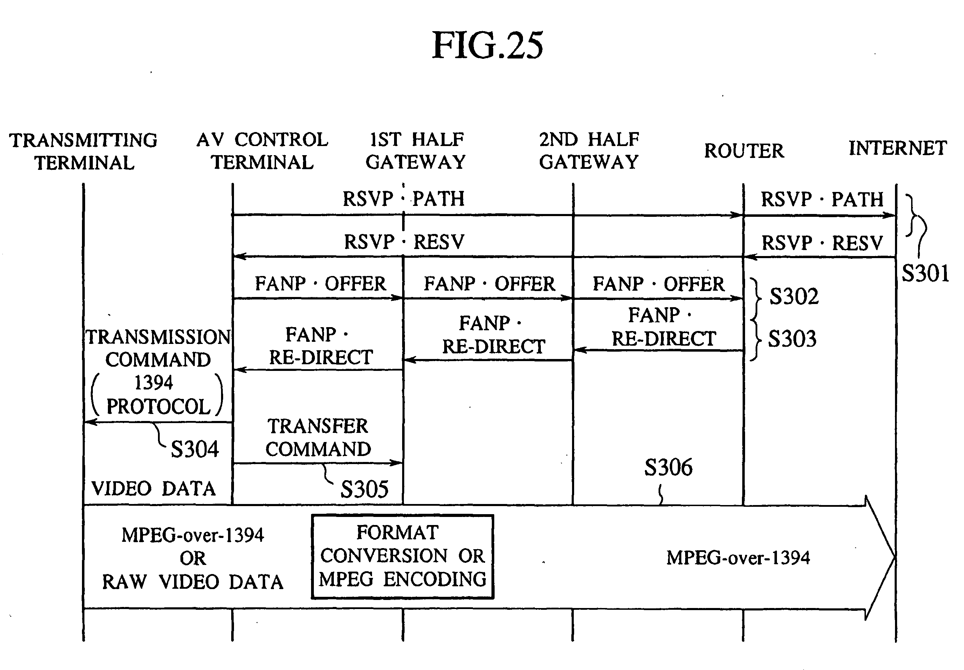

Basically, it suffices to carry out the sequence opposite to that of the receiving described above (see the sequence shown in Fig. 25). Namely, the AV control terminal 3002 establishes a connection up to the receiving terminal by the signaling protocol of the network layer (step S301), transmits the isochronous channel number, etc., to the router 3005 by the FANP, offer message (step S302), and receives the re-direct message from the router 3005.

Also, the AV control terminal 3002 commands the transmitting terminal 3001 to transmit data through the earlier set up isochronous channel, by using the 1394 protocol (step S304), and in addition a command for transfer (or MPEG encoding) is sent from the AV control terminal 3002 to the first half gateway 3303 for example (step S305).

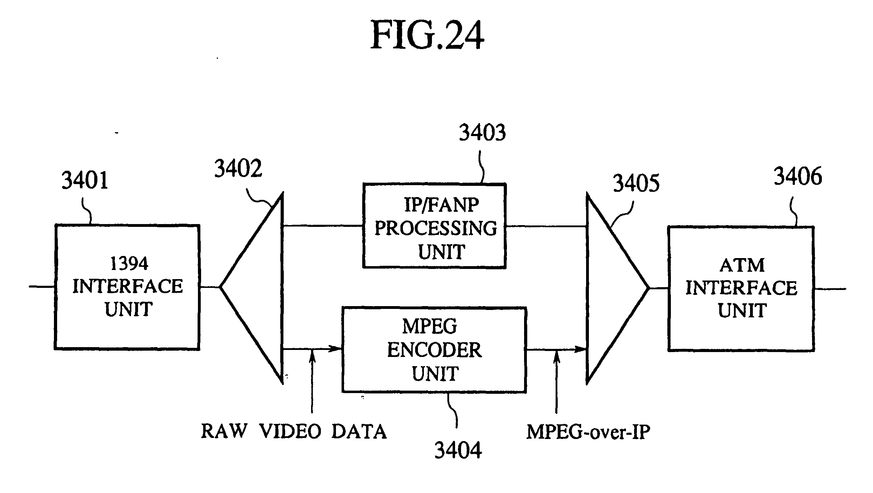

By means of this, when the MPEG encoder unit 3404 as shown in Fig. 24 (in a case where the MPEG encoder is not provided in the transmitting terminal 3002) or the function of the format conversion from the MPEG-over-1394 to the MPEG-over-IP (the MPEG-over-1394/MPEG-over-IP conversion unit 2304) as shown in Fig. 21 is provided at the first half gateway 3003, it becomes possible to carry out the data transmission from the transmitting terminal 3001 (step S306).

Note that, by incorporating the MPEG encoder unit 3404 (for encoding video data transmitted from the 1394 side toward the ATM side) of the half gateway in the configuration shown in Fig. 24 into the half gateway in the configuration shown in Fig. 22 so that the MPEG encoder and the MPEG decoder are provided simultaneously, it becomes possible to carry out the bi-directional communications by a single device (half gateway). It is obviously also possible to use this device in such a manner that two or more uni-directional communications are carried out simultaneously and the encoder and the decoder are used for the respective communications independently.

It is also possible to consider a configuration in which the MPEG encoding function, the MPEG decoding function, and the MPEG format conversion function are provided separately, and necessary ones of these functions are executed by the mode switching according to an appropriate control signal from the AV control terminal 3002.

It is also possible to consider a configuration which is capable of processing a plurality of MPEG streams simultaneously. In this case, it is also possible to adopt the processing scheme in which the different processings are applied to different streams, as in a case of applying the MPEG decoding to one MPEG stream while applying the format conversion from the MPEG-over-IP to the MPEG-over-1394 to another MPEG stream, for example.

As described, according to the present invention, it becomes possible for the dedicated IEEE 1394 terminal to carry out communications with a group of nodes which are operated by the protocol other than the IEEE 1394, and it also becomes possible to inter-connect the IEEE 1394 buses through a physical network other than the IEEE 1394 bus.

It is to be noted that, besides those already mentioned above, many modifications and variations of the above embodiments may be made without departing from the novel and advantageous features of the present invention. Accordingly, all such modifications and variations are intended to be included within the scope of the appended claims.

## Claims

1. A relay device for transmitting and receiving contents data between at least one terminal device (1) connected to a first network (11) and at least one terminal device (8) connected to a second network (12), the relay device being connected to the first network (11) and the second network (12) and comprising:
a reception unit (3) configured to receive the contents data transmitted from the transmitting terminal (1); and
a transmission unit (4) configured to transmit the contents data received by the reception unit (3) to the receiving terminal (6);
**characterized by**
a first collection unit (2) configured to collect an address and attribute information of each terminal device connected to the first network (11), by inquiring at least one of a type of the each terminal device and the contents data possessed by the each terminal device, and the attribute information containing the address of the each terminal device;
a second collection unit (5) configured to collect the address and the attribute information of each terminal device connected to the second network (12), by inquiring at least one of a type of the each terminal device and the contents data possessed by the each terminal device, and the attribute information containing the address of the each terminal device;
a memory unit (2, 5) configured to store the address and the attribute information of each terminal device on the first network (11) and the second network (12) collected by the first collection unit (2) and the second collection unit (5);
a display control unit (2, 5) configured to enable display of information stored in the memory unit (2, 5);
a first set up unit (2, 3) configured to set up a connection for transmitting contents data to be transmitted from a transmitting terminal (1) to a receiving terminal (6), on the first network (11), upon receiving a request for transmission of the contents data possessed by the transmitting terminal (1) from a terminal device on the first network (11) selected as the transmitting terminal (1) to a terminal device on the second network (12) selected as the receiving terminal (6) according to the display of information enabled by the display control unit (2, 5), such that the reception unit (3) receives the contents data transmitted from the transmitting terminal (1) by using the connection; and
a second set up unit (4, 5) configured to set up a channel for transmitting the contents data to be transmitted from the transmitting terminal (1), on the second network (12), such that the transmission unit (4) transmits the contents data received by the reception unit (3) to the receiving terminal (6) by using the channel.

2. The relay device of claim 1, further comprising:
a display unit (2, 5) configured to display the information stored in the memory unit (2, 5) according
to the display control unit (2, 5).

3. The relay device of claim 1, further comprising:
A decoding unit (3) configured to decode encoded contents data received by the reception unit (3),
wherein the transmission unit (4) transmits the contents data decoded by the decoding unit (3) to the receiving terminal (6) by using the channel.

4. The relay device of claim 1, wherein the first network (11) is an IEEE 1394 bus, and the channel is an IEEE 1394 isochronous transfer channel.

5. The relay device of claim 4, wherein the IEEE 1394 bus that constitutes the first network (11) is formed by bridge connections of a plurality of IEEE 1394 buses.

6. The relay device of claim 1, further comprising:
a command unit (2) configured to command the transmitting terminal (1) to transmit the contents data by using the connection, when the channel is set up on the second network (12) by the second set up unit (4, 5) according to a control message received by the relay device; the control message containing at least information regarding a required amount of communication resources at a time of transmitting the contents data on the second network (12) and a header information to be attached to the contents data, in order to set up the channel on the second network (12).

7. The relay device of claim 1, wherein the request for transmission of the content data possessed by the transmitting terminal (1) is made by a request message containing information for identifying the transmitting terminal (1) such that the transmission of the contents data is commanded to the transmitting terminal (1) identified by this information.

8. The relay device of claim 1, further comprising:
a command unit (5) configured to command the receiving terminal device (6) to receive the contents data to be transmitted by using the channel when the channel is set up by the second set up unit (4, 5).

9. The relay device of claim 1, wherein the second network (12) is an IEEE 1394 bus, and the channel is an IEEE 1394 isochronous transfer channel.

10. The relay device of claim 9, wherein the IEEE 1394 bus that constitutes the second network (12) is formed by bridge connections of a plurality of IEEE 1394 buses.

11. A method for controlling a relay device for transmitting and receiving contents data between at least one terminal device connected to a first network and at least one terminal device connected to a second network, the relay device being connected to the first network and the second network and the method comprising:
receiving the contents data transmitted from the transmitting terminal, and
transmitting the contents data received by the receiving step to the receiving terminal;
**characterized by**
collecting an address and attribute information of each terminal device connected to the first network, by inquiring at lease one of a type of the each terminal device and the contents data possessed by the each terminal device, and the attribute information containing the address of the each terminal device;
collecting the address and the attribute information of each terminal device connected to the second network, by inquiring at least one of a type of the each terminal device and the contents data possessed by the each terminal device, and the attribute information containing the address of the each terminal device;
storing the address and the attribute information of each terminal device on the first network and the second network collected by the collecting steps in a memory;
enabling display of information stored on the memory;
setting up a connection for transmitting contents data to be transmitted from a transmitting terminal to a receiving terminal, on the first network, upon receiving a request for transmission of the contents data possessed by the transmitting terminal from a terminal device on the first network selected as the transmitting terminal to a terminal device on the second network selected as the receiving terminal according to the display of information enabled by the enabling step, such that the receiving step receives the contents data transmitted from the transmitting terminal by using the connection; and
setting up a channel for transmitting the contents data to be transmitted from the transmitting terminal, on the second network, such that the transmitting step transmits the contents data received by the receiving step to the receiving terminal by using the channel.

## Patentansprüche

1. Relaisvorrichtung zum Senden und Empfangen von Inhalte-Daten zwischen mindestens einer mit einem ersten Netz (11) verbundenen Endgerätevorrichtung (1) und mindestens einer mit einem zweiten Netz (12) verbundenen Endgerätevorrichtungen (8), wobei die Relaisvorrichtung mit dem ersten Netz (11) und dem zweiten Netz (12) verbunden ist und umfasst:
eine Empfangseinheit (3), konfiguriert zum Empfangen von dem sendenden Endgerät (1) gesendeten Inhalte-Daten; und
eine Sendeeinheit (4), konfiguriert zum Senden von den durch die Empfangseinheit (3) empfangenen Inhalte-Daten zu dem empfangenden Endgerät (6);
**gekennzeichnet durch**
eine erste Sammeleinheit (2), die konfiguriert ist zum Sammeln einer Adress- und Attributinformation jeder mit dem ersten Netz (11) verbundenen Endgerätevorrichtung durch Abfragen mindestens eines von einem Typ der jeweiligen Endgerätevorrichtung und den Inhalte-Daten, die die jeweilige Endgerätevorrichtung besitzt, und der die Adresse der jeweiligen Endgerätevorrichtung enthaltenden Attributinformation;
eine zweite Sammeleinheit (5), konfiguriert zum Sammeln der Adress- und Attributinformation jeder mit dem zweiten Netz (12) verbundenen Endgerätevorrichtung **durch** Abfragen von mindestens einem von einem Typ der jeweiligen Endgerätevorrichtung und den Inhalte-Daten, die die jeweilige Endgerätevorrichtung besitzt, und der die Adresse der jeweiligen Endgerätevorrichtung enthaltenden Attributinformation;
eine Speichereinheit (2, 5), konfiguriert zum Speichern der Adress- und Attributinformation der jeweiligen Endgerätevorrichtung in dem ersten Netz (11) und dem zweiten Netz (12), gesammelt **durch** die erste Sammeleinheit (2) und die zweite Sammeleinheit (5);
eine Anzeigesteuereinheit (2, 5), konfiguriert zum Zulassen des Anzeigens von in der Speichereinheit (2, 5) gespeicherter Information;
eine erste Einrichteeinheit (2, 3), konfiguriert zum Einrichten einer Verbindung zum Senden von von einem sendenden Endgerät (1) zu sendenden Inhalte-Daten zu einem empfangenden Endgerät (6) in dem ersten Netz (11) auf das Empfangen einer Anfrage zum Senden der Inhalte-Daten, die das sendende Endgerät (1) besitzt, von einer Endgerätevorrichtung des ersten Netzes (11), die als das sendende Endgerät (1) ausgewählt worden ist, zu einer Endgerätevorrichtung des zweiten Netz (12), die als das empfangende Endgerät (6) ausgewählt worden ist, in Übereinstimmung mit dem **durch** die Anzeigesteuereinheit (2, 5) zugelassenen Anzeigen von Information derart, dass die Empfangseinheit (3) die von dem sendenden Endgerät (1) gesendeten Inhalte-Daten unter Verwendung der Verbindung empfängt; und
eine zweite Einrichteeinheit (4, 5), konfiguriert zum Einrichten eines Kanals zum Senden der von dem sendenden Endgerät (1) zu sendenden Inhalte-Daten in dem zweiten Netz (12) derart, dass die Sendeeinheit (4) die von der Empfangseinheit (3) empfangenen Inhalte-Daten zu dem empfangenden Endgerät (6) unter Verwendung des Kanals sendet.

2. Relaisvorrichtung nach Anspruch 1, ferner umfassend:
eine Anzeigeeinheit (2, 5), konfiguriert zum Anzeigen der in der Speichereinheit (2, 5) gespeicherten Information in Übereinstimmung mit der Anzeigesteuereinheit (2, 5).

3. Relaisvorrichtung nach Anspruch 1, ferner umfassend:
eine Decodiereinheit (3), konfiguriert zum Decodieren codierter, von der Empfangseinheit (3) empfangener Inhalte-Daten, wobei die Sendereinheit (4) die Inhalte-Daten decodiert durch die Decodiereinheit (3) zu dem empfangenden Endgerät (6) unter Verwendung des Kanals sendet.

4. Relaisvorrichtung nach Anspruch 1, wobei das erste Netz (11) ein IEEE-1394-Bus ist und der Kanal ein isochroner IEEE-1394-Übertragungskanal ist.

5. Relaisvorrichtung nach Anspruch 4, wobei der IEEE-1394-Bus, der das erste Netz (11) bildet, durch Bridge-Verbindungen einer Vielzahl von IEEE-1394-Bussen gebildet wird.

6. Relaisvorrichtung nach Anspruch 1, ferner umfassend:
eine Befehlseinheit (2), konfiguriert, um dem sendenden Endgerät (1) zu befehlen, Inhalte-Daten unter Verwendung der Verbindung zu senden, wenn der Kanal im zweiten Netz (12) durch die zweite Einrichteeinheit (4, 5) eingerichtet worden ist in Übereinstimmung mit einer Steuernachricht, die von der Relaisvorrichtung erhalten wird;
wobei die Steuernachricht mindestens Information in Bezug auf einen erforderlichen Umfang an Kommunikationsressourcen zu einer Zeit des Sendens der Inhalte-Daten in dem zweiten Netz (12) enthält und eine Header-Information, die zu den Inhalte-Daten hinzuzufügen ist, um den Kanal im zweiten Netz (12) einzurichten.

7. Relaisvorrichtung nach Anspruch 1, wobei die Anforderung nach dem Senden der Inhalte-Daten, die das sendende Endgerät (1) besitzt, durch eine Anforderungsnachricht vorgenommen wird, die Information zum Identifizieren des sendenden Endgeräts (1) derart umfasst, dass das Senden der Inhalte-Daten dem sendenden Endgerät (1), das durch diese Information identifiziert wird, befohlen wird.

8. Relaisvorrichtung nach Anspruch 1, ferner umfassend:
eine Befehlseinheit (5), konfiguriert, um der empfangenden Endgerätevorrichtung (6) zu befehlen, die zu sendenden Inhalte-Daten unter Verwendung des Kanals zu empfangen, wenn der Kanal durch die zweite Einrichteeinheit (4, 5) eingerichtet worden ist.

9. Relaisvorrichtung nach Anspruch 1, wobei das zweite Netz (12) ein IEEE-1394-Bus ist und der Kanal ein isochroner IEEE-1394-Übertragungskanal ist.

10. Relaisvorrichtung nach Anspruch 9, wobei der IEEE-1394-Bus, der das zweite Netz (12) bildet, durch Bridge-Verbindungen einer Vielzahl von IEEE-1394-Bussen gebildet wird.

11. Verfahren zum Steuern einer Relaisvorrichtung zum Senden und Empfangen von Inhalte-Daten zwischen mindestens einer mit einem ersten Netz verbundenen Endgerätevorrichtung und mindestens einer mit einem zweiten Netz verbundenen Endgerätevorrichtung, wobei die Relaisvorrichtung mit dem ersten Netz und dem zweiten Netz verbunden ist und das Verfahren umfasst:
Empfangen der von dem sendenden Endgerät gesendete Inhalte-Daten, und
Senden der durch den Empfangsschritt empfangenen Inhalte-Daten zu dem empfangenden Endgerät;
**gekennzeichnet durch**
Sammeln einer Adress- und Attributinformation jeder mit dem ersten Netz verbundenen Endgerätevorrichtung **durch** Abfragen von mindestens einem von einem Typ der jeweiligen Endgerätevorrichtung und den Inhalte-Daten, die die jeweilige Endgerätevorrichtung besitzt, und der die Adresse der jeweiligen Endgerätevorrichtung enthaltenden Attributinformation;
Sammeln der Adress- und Attributinformation jeder mit dem zweiten Netz verbundenen Endgerätevorrichtung **durch** Abfragen von mindestens einem von einem Typ der jeweiligen Endgerätevorrichtung und den Inhalte-Daten, die die jeweilige Endgerätevorrichtung besitzt, und der die Adresse der jeweiligen Endgeräteeinrichtung enthaltenden Attributinformation;
Speichern der in dem Sammelschritte gesammelten Adress- und der Attributinformation der jeweiligen Endgerätevorrichtung in dem ersten Netz und dem zweiten Netz, in einem Speicher;
Zulassen des Anzeigens von in dem Speicher gespeicherter Information;
Einrichten einer Verbindung zum Senden von von einem sendenden Endgerät zu einem empfangenden Endgerät zu sendenden Inhalte-Daten in dem ersten Netz auf das Empfangen einer Anforderung für das Senden der Inhalte-Daten, die das sendende Endgerät besitzt, von einer Endgerätevorrichtung im ersten Netz, die als das sendende Endgerät ausgewählt worden ist, zu einer Endgerätevorrichtung im zweiten Netz, die als das empfangende Endgerät ausgewählt worden ist, in Übereinstimmung mit dem Anzeigen von **durch** den Zulassungsschritt zugelassener Information, derart, dass der Empfangsschritt die von dem sendenden Endgerät unter Verwendung der Verbindung gesendeten Inhalte-Daten empfängt; und
Einrichten eines Kanals zum Senden der von dem sendenden Endgerät zu sendenden Inhalte-Daten in dem zweiten Netz derart, dass der Sendeschritt die von dem Empfangsschritt empfangenen Inhalte-Daten zu dem empfangenden Endgerät unter Verwendung des Kanals sendet.

## Revendications

1. Dispositif relais en vue de transmettre et de recevoir des données de contenu entre au moins un dispositif terminal (1) connecté à un premier réseau (11) et au moins un dispositif terminal (8) connecté à un second réseau (12), le dispositif relais étant connecté au premier réseau (11) et au second réseau (12) et comportant :
une unité de réception (3) configurée en vue de recevoir les données de contenu transmises par le terminal de transmission (1) ;
une unité de transmission (4) configurée en vue de transmettre les données de contenu reçues par l'unité de réception (3) au terminal de réception (6) ;
**caractérisé par**
une première unité de collecte (2) configurée en vue de collecter des informations d'adresses et d'attributs de chaque dispositif terminal connecté au premier réseau (11), en demandant au moins l'un d'un type de chaque dispositif terminal et les données de contenu possédées par chaque dispositif terminal, et les informations d'attributs contenant l'adresse de chaque dispositif terminal ;
une seconde unité de collecte (5) configurée en vue de collecter les informations d'adresses et d'attributs de chaque dispositif terminal connecté au second réseau (12), en demandant au moins l'un d'un type de chaque dispositif terminal et les données de contenu possédées par chaque dispositif terminal, et les informations d'attributs contenant l'adresse de chaque dispositif terminal ;
une unité de mémoire (2, 5) configurée en vue de stocker les informations d'adresses et d'attributs de chaque dispositif terminal sur le premier réseau (11) et sur le second réseau (12), collectées par la première unité de collecte (2) et la seconde unité de collecte (5) ;
une unité de commande d'affichage (2, 5) configurée en vue de permettre un affichage des informations stockées dans l'unité de mémoire (2, 5) ;
une première unité de configuration (2, 3) configurée en vue d'établir une connexion en vue de transmettre des données de contenu à transmettre d'un terminal de transmission (1) à un terminal de réception (6), sur le premier réseau (11), après réception d'une demande de transmission des données de contenu possédées par le terminal de transmission (1) d'un dispositif terminal sur le premier réseau (11) sélectionné comme terminal de transmission (1) à un dispositif terminal sur le second réseau (12) sélectionné comme terminal de réception (6) selon l'affichage d'informations autorisé par l'unité de commande d'affichage (2, 5), de sorte que l'unité de réception (3) reçoit les données de contenu transmises par le terminal de transmission (1) en utilisant la connexion ; et
une seconde unité de configuration (4, 5) configurée en vue d'établir un canal en vue de la transmission des données de contenu à transmettre à partir du terminal de transmission (1), sur le second réseau (12), de sorte que l'unité de transmission (4) transmet les données de contenu reçues par l'unité de réception (3) au terminal de réception (6) au moyen du canal.

2. Dispositif relais selon la revendication 1 comportant en outre :
une unité d'affichage (2, 5) configurée en vue d'afficher les informations stockées dans l'unité de mémoire (2, 5) selon l'unité de commande d'affichage (2, 5).

3. Dispositif relais selon la revendication 1 comportant en outre :
une unité de décodage (3) configurée en vue de décoder des données de contenu codées reçues par l'unité de réception (3), dans lequel l'unité de transmission (4) transmet les données de contenu décodées par l'unité de décodage (3) au terminal de réception (6) au moyen d'un canal.

4. Dispositif relais selon la revendication 1, dans lequel le premier réseau (11) est un bus IEEE 1394, et le canal est un canal de transfert isochrone IEEE 1394.

5. Dispositif relais selon la revendication 4, dans lequel le bus IEEE 1394 qui constitue le premier réseau (11) est formé par des connexions en pont d'une pluralité de bus IEEE 1394.

6. Dispositif relais selon la revendication 1 comportant en outre :
une unité de commande (2) configurée en vue de commander le terminal de transmission (1) afin de transmettre les données de contenu en utilisant la connexion, lorsque le canal est établi sur le second réseau (12) au moyen de la seconde unité de configuration (4, 5) selon un message de commande reçu par le dispositif relais ; le message de commande contenant au moins des informations relatives à une quantité requise de ressources de communication à un moment de transmission des données de contenu sur le second réseau (12) et des informations d'en-tête à joindre aux données de contenu, afin d'établir le canal sur le second réseau (12).

7. Dispositif relais selon la revendication 1, dans lequel la demande de transmission des données de contenu possédées par le terminal de transmission (1) est exécutée par un message de demande contenant des informations permettant d'identifier le terminal de transmission (1) de sorte que la transmission des données de contenu est commandée au terminal de transmission (1) identifié par ces informations.

8. Dispositif relais selon la revendication 1 comportant en outre :
une unité de commande (5) configurée en vue de commander le dispositif terminal de réception (6) afin de recevoir les données de contenu à transmettre en utilisant le canal lorsque le canal est établi par la seconde unité de configuration (4, 5).

9. Dispositif relais selon la revendication 1, dans lequel le second réseau (12) est un bus IEEE 1394, et le canal est un canal de transfert isochrone IEEE 1394.

10. Dispositif relais selon la revendication 9, dans lequel le bus IEEE 1394, qui constitue le second réseau (12) est formé par des connexions en pont d'une pluralité de bus IEEE 1394.

11. Procédé destiné à commander un dispositif relais en vue de transmettre et de recevoir
des données de contenu entre au moins un dispositif terminal connecté à un premier réseau et au moins un dispositif terminal connecté à un second réseau, le dispositif relais étant connecté au premier réseau et au second réseau et comportant les étapes consistant à :
recevoir les données de contenu transmises par le terminal de transmission, et
transmettre les données de contenu reçues à l'étape de réception au terminal de réception ;
**caractérisé par** les étapes consistant à
collecter des informations d'adresses et d'attributs de chaque dispositif terminal connecté au premier réseau, en demandant au moins l'un d'un type de chaque dispositif terminal et les données de contenu possédées par chaque dispositif terminal, et les informations d'attributs contenant l'adresse de chaque dispositif terminal ;
collecter les informations d'adresses et d'attributs de chaque dispositif terminal connecté au second réseau, en demandant au moins l'un d'un type de chaque dispositif terminal et les données de contenu possédées par chaque dispositif terminal, et les informations d'attributs contenant l'adresse de chaque dispositif terminal ;
stocker les informations d'adresses et d'attributs de chaque dispositif terminal sur le premier réseau et le second réseau, collectées à l'étape de collecte dans une mémoire ;
permettre un affichage des informations stockées dans la mémoire ;
établir une connexion en vue de transmettre des données de contenu à transmettre d'un terminal de transmission à un terminal de réception, sur le premier réseau, après réception d'une demande de transmission des données de contenu possédées par le terminal de transmission d'un dispositif terminal sur le premier réseau sélectionné comme terminal de transmission à un dispositif terminal sur le second réseau sélectionné comme terminal de réception selon l'affichage d'informations autorisé à l'étape de permission, de sorte l'étape de réception reçoit les données de contenu transmises par le terminal de transmission en utilisant la connexion ; et
établir un canal en vue de la transmission des données de contenu à transmettre à partir du terminal de transmission, sur le second réseau, de sorte que l'étape de transmission transmet les données de contenu reçues à l'étape réception au terminal de réception au moyen du canal.
